# EUROPEAN PATENT SPECIFICATION

(11) **EP 2 734 055 B1**
(45) Date of publication and mention of the grant of the patent: **24.06.2020**
(21) Application number: 12741209.6
(22) Date of filing: 19.07.2012
(51) Int. Cl.: A23G 4/04, A23G 3/00

(54) **ADVANCED CHEWING GUM FORMING**
VERBESSERTE HERSTELLUNG VON KAUGUMMI
FORMAGE DE GOMME À MÂCHER AVANCÉ

(30) Priority: 21.07.2011 US 201161510116 P
(43) Date of publication of application: 28.05.2014
(73) Proprietor: Intercontinental Great Brands LLC, East Hanover, NJ 07936 (US)
(72) Inventor: JANI, Bharat, East Brunswick, New Jersey 08816 (US); SCAROLA, Leonard, Cary, North Carolina 27519 (US); VAN NIEKERK, Miles, Madison, New Jersey 07940 (US); ADIVI, Krishna, Summit, New Jersey 07901 (US); KIEFER, Jesse, Oxford, New Jersey 07863 (US)
(74) Representative: Wilson Gunn
(86) International application number: PCT/US2012/047404
(87) International publication number: WO 2013/013041

(56) References cited:
- EP-A1- 0 979 714
- WO-A1-2011/090520
- US-A- 1 771 506
- US-A- 4 555 407
- US-A- 5 733 583
- US-A- 5 971 739
- US-A1- 2010 136 165
- US-A1- 2011 052 756

## Description

### FIELD OF THE INVENTION

The present invention relates to methods for forming chewing gum.

### BACKGROUND OF THE INVENTION

Typically, the process of making and packaging gum products is time-consuming and involves a significant amount of machinery. The process of making and packing gum products can include mixing and producing a finished gum as a non-uniform output, extruding and forming the finished gum into loaves, conditioning the loaves of the finished gum, extruding the loaves into a continuous thin sheet of the finished gum, rolling the continuous sheet through a series of rollers to a uniform reduced thickness, scoring and dividing sheets into individual scored sheets, conditioning the individual sheets in a conditioning room, dividing sheets into gum pieces, and packaging the gum pieces. Such processes of making and packaging gum products are disclosed in U.S. Patent No. 6,254,373 assigned to the predecessor of interest of the present assignee, and U.S. Patent Application No. 12/352,110 assigned to the present assignee.
US 1771506 describes a method for forming a sandwich having top and bottom layers of a chewing gum and an intermediate layer of confection, fruit or medicine; the method involving sizing a gum mass between a pair of rollers in a straight line.
US2010136165 describes a method of forming layered confections comprising a dough-like confectionery material containing a solid particulate, a liquid, and a diffusion controller; the method involving sizing a gum mass between a pair of rollers in a straight line.

Traditional sizing machinery may include a sizing extruder that forces the chewing gum through a small rectangular orifice (e.g. a rectangular orifice having dimensions of about 25 mm by 457 mm). A relatively sizeable amount of force is required as the orifice size gets smaller (e.g. a 30 HP drive may be needed for sufficient output/production volume). Typically, the product exiting the sizing extruder is still much too thick. As a result, many prior systems will typically employ a series of sizing rollers arranged in sequence over a conveyor belt to progressively reduce the thickness of gum from around 25 mm to typically about 2-6 mm. To prevent sticking of gum to the rollers, dusting with a suitable powder agent is typically employed. Thereafter, a scoring roll and dividing roll may be used to generate thin sticks, or somewhat shorter and fatter slabs of gum, or pellets (any of the foregoing sticks, slabs, pellets or other dimension gum maybe referred to as "sized gum.") Such traditional lines also typically will necessitate a fair amount of subsequent cooling and/or conditioning prior to packaging as warm pliable product does not package well.

The present invention is directed toward improvements and advancements over such prior systems and methods of making and packaging gum products.

### BRIEF SUMMARY OF THE INVENTION

Provided as part of the present invention is a method for forming chewing gum, the method comprising:
providing a pair of rollers including a first roller and a second roller;
moving a gum mass having a non-uniform thickness from a hopper toward a gap between said rollers in a direction of flow; and
sizing the gum mass into a substantially continuous and flat gum sheet having a substantially uniform thickness between 0.3 mm to 10 mm via said pair of rollers, wherein said sizing via said pair of rollers pulls the gum mass towards and through a gap between said pair of rollers and said sizing causes 30 to 75% of a cross-sectional area of the gum mass between the gap and the hopper to be deflected in a reverse directional flow, said 30 to 75% of said cross-sectional area of the gum mass to be deflected occurring at an interior of the gum mass; where the reverse directional flow is measured at a location along a gap center line where the separation between the rollers is 10 to 50 times the gap width.

Also disclosed is a method for forming gum as defined above, wherein surface areas of the gum mass in proximity to the pair of rollers are pulled by the pair of rollers at a greater velocity than more internal areas of the gum mass disposed distal to the pair of rollers.

Additionally disclosed (but not claimed) is a method for forming gum, the method including providing a pair of rollers including a first roller and a second roller, moving a gum mass toward a gap between the rollers in a direction of flow, and sizing the gum mass into a substantially continuous and flat gum sheet having a substantially uniform thickness between about 0.3 mm to 10 mm via the pair of rollers, wherein the sizing consumes an energy of not more than .009 KWH/kg in transforming the gum mass into the substantially continuous and flat gum sheet.

Further disclosed (but not claimed) is a method for forming gum, the method including providing a pair of rollers including a first roller and a second roller; moving a gum mass toward a gap between the rollers in a direction of flow, and sizing the gum mass into a substantially continuous and flat gum sheet having a substantially uniform thickness between about 0.3 mm to 10 mm via the pair of rollers, preventing the gum mass from adhering to the pair of rollers during the sizing without applying a particulate material to the gum mass or the pair of rollers, wherein the sizing consumes an energy of not more than .009 KWH/kg in transforming the gum mass into the substantially continuous and flat gum sheet.

Still further disclosed (but not claimed) is a method for forming gum, the method including providing a pair of rollers including a first roller and a second roller, and sizing a gum mass into a substantially continuous and flat gum sheet having a substantially uniform thickness between about 0.3 mm to 10 mm, a length of not less than 180 cm, and a width of not less than 50 cm solely via a moving of the gum mass through a gap between the pair of rollers.

Also disclosed (but not claimed) is a method for forming gum, the method including providing a pair of rollers including a first roller and a second roller, moving a gum mass toward a gap between the rollers in a direction of flow, and sizing the gum mass into a substantially continuous and flat gum sheet having a substantially uniform thickness between about 0.3 mm to 10 mm via the pair of rollers, preventing the gum mass from adhering to the pair of rollers during the sizing via a liquid release agent applied to at least one of the pair of rollers, at least a portion of the release agent remaining with the gum sheet after the sizing.

### BRIEF DESCRIPTION OF THE DRAWINGS

The accompanying drawings incorporated in and forming a part of the specification embodies several aspects of the present invention and, together with the description, serve to explain the principles of the invention. In the drawings:
FIG. 1 is a partly schematic and partly perspective illustration of a gum manufacturing system;
FIG. 2 is a partly schematic and partly perspective illustration of a gum manufacturing system;
FIG. 3 is a partly schematic and partly perspective illustration of a gum manufacturing system;
FIG. 4 is a partly schematic and partly perspective illustration of a gum manufacturing system;
FIG. 5 is a schematic illustration of a cross-web view of the gum forming system including a set of rollers secured to structural frames, wherein generally uniform cross web spacing is provided between the pair of rollers;
FIG. 6 is a schematic illustration of a cross-web view of the gum forming system of FIG. 5 showing a deflection between the pair of rollers;
FIG. 7 is a perspective top view of a hopper including a pair of feed rollers;
FIG. 8 is a cross-sectional view of a pair of rollers including a cooling channel;
FIG. 9 is a perspective view of a stand-alone cooling roller;
FIG. 10 is a schematic illustration of a chilled conveyor belt;
FIG. 11 is a schematic illustration of a gum forming system including multiple heat transfer rollers;
FIG. 12 is a gum flow diagram according to an exemplary embodiment; and
FIG. 13 is a gum velocity distribution diagram according to an exemplary embodiment.

While the invention will be described in connection with certain preferred embodiments, there is no intent to limit it to those embodiments.

### DETAILED DESCRIPTION OF THE INVENTION

The following disclosure will detail particular embodiments, which provide improvements for forming a gum sheet and facilitating heat transfer from or to the gum sheet. A system includes a set of rollers for forming a gum structure/mass into a continuous web or sheet having a desired thickness and a width, while imparting temperature control to the gum at the same time. The system can form the gum mass into a gum sheet including a desired width and thickness with a lower variance than conventional lines. Further, the system can eliminate a need of a sizing-type extruder and a series of rollers in conventional gum lines for progressively reducing a thickness of a gum mass to a desired sheet thickness. By eliminating the use of the sizing-type extruder, the system can operate at a much lower energy than the conventional lines including the sizing-type extruder. Therefore the system may reduce energy consumption and shear force introduced when deforming a gum structure or mass into a gum sheet of a desirable thickness, thereby potentially preserving more shear or temperature sensitive ingredients in the gum.

Further, the system can produce a much wider width of the sheet of the gum when compared to the sizing-type extruder of conventional lines, and can also eliminate a need of powder dusting material. By eliminating the use of powder dusting material, a clean up time for change over can be reduced to a fraction of the conventional rolling and scoring lines, thereby significantly reducing a production down time. This additionally reduces overall cost of operating the line because there is no need for the additional dusting material. In addition to these advantages over the conventional lines, the rollers of the system can also be chilled (or heated) to provide cooling during deformation of the gum mass to a desired thickness and width. Therefore, the system can form and cool or heat the gum mass all at one step, thereby proving many advantages over conventional gum lines.

Further, gum products manufactured according to embodiments of the present disclosure can be structurally distinguishable from gum products produced using conventional gum lines, as the systems may result in different crystallization of gums by quick cooling of the gum and eliminating a high shear sizing-type extruder, multiple rollers for rolling sizing reduction, and an extended cooling/conditioning of gums. Further, more aesthetically pleasing chewing gum production can occur by eliminating use of powder dusting materials and producing chewing gum products having a desired thickness and width with relatively small thickness and width variances when compared to those produced via conventional gum lines.

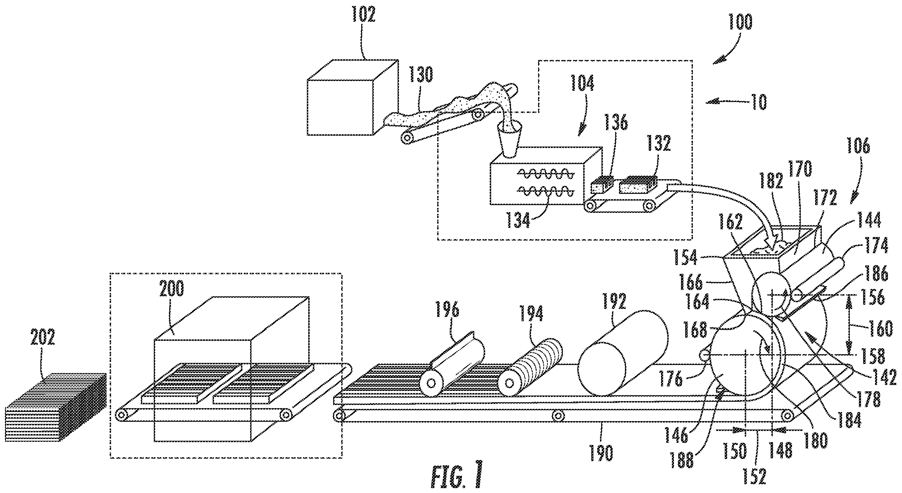

FIG. 1 shows a gum manufacturing system 100. The gum manufacturing system 100 generally includes a gum mixing system 102, a gum forming or sizing system 106, a scoring roller 194, and a dividing roller 196. The gum manufacturing system 100 is also shown here with an optional loafing machine 104, and a cooling tunnel 200. It should be noted that the scoring roller 194 and/or the dividing roller may also be disposed downstream of the cooling tunnel 200.

The gum mixing system 102 may include a single mixer or multiple mixers equipped with various mixer components and/or mixer feeding systems for processing gum ingredients to make a gum structure or mass. The mixers of mixing system 102 may be, for example, a batch mixer or a continuous mixer such as an extruder. Further, gum mixing system 102 could be merely a melting system that melts previously formed gum into a condition in which it can be subsequently formed.

In accordance with aspects of the system 106, the gum forming system 106 provides for sizing and potentially temperature control (i.e. cooling or heating), and reduces/eliminates downstream progressive rolling operations. This gum forming system 106 also, as will be explained, can be used to eliminate sizing type extruders (e.g. the extruders that form wide thin ribbons of gum), which may reduce a processing force or average strain, and temperature, thereby leading to less attrition of pressure sensitive materials. The system may also increase the amount of shear or temperature sensitive ingredients remaining intact during processing. The gum forming system 106 may be used to form various gum masses (of various compositions), such as a finished gum, a finished gum base, a gum base including candy bits, etc. Although, most of the embodiments discussed herein involve gum, other confectioneries that do not contain an elastomeric compound can also be formed, sized and/or conditioned using the forming station 106. Before turning to greater details of the gum mixing system 102, first some general compositional information about gum will be provided.

### CHEWING GUM GENERALLY

Chewing gum comprises in large part of components that are usually never swallowed, gum base, which is the rubber-like chewing component. Chewing gum also comprises a consumed portion including sweeteners, flavors and the like, and may also include other candy or food product integrated therewith in layers or as ingredients. The gum base is relatively unique in food processing in that it introduces the material with a resiliency and elasticity relative to processing and also provides a relatively non-conductive or insulating material that does not transfer heat very well. This provides unique processing difficulties. Relative to processing, the temperature of the processed gum product greatly affects viscosity as well as other processing characteristics such as elasticity and resiliency.

Further, different types of gum recipes will also alter processing considerations, and there generally is a desire to run different gum recipes on the same equipment or lines. Some of the ingredients handle processing quite well. Other ingredients such as flavors may be subject to flash off due to heat, thereby diminishing the amount of flavor in the final consumable product. Other ingredients such as encapsulated sweeteners, are sensitive to shear forces (e.g. due to substantial pressure, intense mixing, processing force and the like) and thus can be damaged during processing. These factors all provide different challenges relative to sizing the gum to a small bit size portion and conditioning of the gum for packaging in gum packaging. For purpose of understanding, some lexicography and typical gum composition components will be discussed below.

As used herein, "gum structure," "gum mass," or "gum sheets" may include, but are not limited to, compositions ranging from and inclusive of compounded elastomer to finished gum, which may include compounded elastomer in addition to some compounding aids, master batch gum base, compounded elastomer in addition to some subsequent gum ingredients, compounded elastomer in addition to some gum base ingredients and some subsequent gum ingredients, gum base, gum base in addition to some subsequent gum ingredients, master batch finished gum, and finished gum.

Before explaining methods according to the present invention, it is helpful to discuss the general composition of several typical gum structures that are or may be included in forming the most complex gum structure, namely finished gum, that can be formed using embodiments of the methods of the present invention.

A "finished gum", as used herein, will refer to a gum structure that is generally ready for preparation to distribute the product to the consumer. As such, a finished gum may still require temperature conditioning, forming, shaping, packaging and coating. However, the gum composition itself is generally finished. Not all finished gums have the same ingredients or the same amounts of individual ingredients. By varying the ingredients and amounts of ingredients, textures, flavor and sensations, among other things, can be varied to provide differing characteristics to meet the needs of users.

As is generally well known, a finished gum generally includes a water soluble bulk portion, a water insoluble gum base portion, and one or more flavoring agents. The water soluble portion dissipates over a period of time during chewing. The gum base portion is retained in the mouth throughout the chewing process. A finished gum is typically ready for user consumption.

A "finished gum base", as used herein, will refer to a gum structure that includes a sufficient combination of gum base ingredients that need only be combined with subsequent gum ingredients to form a finished gum. A finished gum base is a chewable visco-elastic material that includes at least a viscous component, an elastic component, and a softener component. For example, a typical gum base may include elastomer, at least some of the filler, resin and/or plasticizer, polyvinyl acetate, and a softener (such as an oil, fat or wax). Merely compounded elastomer without the addition of any softener, for example, would not be a finished gum base because it would not be considered useable in a finished gum structure because of its difficulty, if not impossibility, to chew.

### Ingredients

Gum structures may include a vast number of ingredients in various categories. Gum mixing methods according to various embodiments of the present invention may be used to mix any and all known ingredients including, but not limited to, ingredients in the following ingredient categories: elastomers, bulking agents, elastomer plasticizers (which includes resins), elastomer solvents, plasticizers, fats, waxes, fillers, antioxidants, sweeteners (e.g. bulk sweeteners and high intensity sweeteners), syrups/fluids, flavors, sensates, potentiators, acids, emulsifiers, colors, and functional ingredients.

The insoluble gum base generally includes ingredients falling under the following categories: elastomers, elastomer plasticizers (resins or solevents), plasticizers, fats, oils, waxes, softeners and fillers. Further discussion of representative ingredients within each category will be provided later on. The gum base may constitute between 5-95% by weight of a finished gum, more typically 10-50% by weight of the finished gum, and most commonly 20-30% by weight of the finished gum.

The water soluble portion of finished gum may includes subsequent gum ingredients falling under the following categories: softeners, bulk sweeteners, high intensity sweeteners, flavoring agents, acids, additional fillers, functional ingredients and combinations thereof. Softeners are added to the gum in order to optimize the chewability and mouth feel of the gum. The softeners, which are also known as plasticizers, plasticizing agents or emulsifiers, generally constitute between about 0.5-15% by weight of the gum structure. Bulk sweeteners constitute between 5-95% by weight of the gum structure, more typically 20-80% by weight of the gum and most commonly 30-60% by weight of the gum. High intensity sweeteners may also be present and are commonly used with sugarless sweeteners. When used, high intensity sweeteners typically constitute between 0.001-5% by weight of the gum structure, preferably between 0.01-3% by weight of the chewing gum. Typically, high intensity sweeteners are at least 20 times sweeter than sucrose.

Flavor should generally be present in the gum in an amount within the range of about 0.1-15% by weight of the chewing gum, preferably between about 0.2-5% by weight of the gum, most preferably between about 0.5-3% by weight of the gum. Natural and artificial flavoring agents may be used and combined in any sensorially acceptable fashion.

When included, acids typically constitute between about 0.001-5% by weight of the gum structure.

Optional ingredients such as colors, functional ingredients and additional flavoring agents may also be included in gum structures.

Now that a more general overview has been provided as to general common ingredients, more details about individual categories of ingredients and examples of specific ingredients with in various categories will be provided below.

### Elastomers

The elastomers (rubbers) employed in the gum structure will vary greatly depending upon various factors such as the type of gum structure desired, the consistency of gum structure desired and the other components used in the gum structure. The elastomer may be any water-insoluble polymer known in the art, and includes those polymers utilized for chewing gums and bubble gums. Illustrative examples of suitable polymers in gum structures, and particularly gum bases, include both natural and synthetic elastomers. For example, those polymers which are suitable in gum structures include, without limitation, natural substances (of vegetable origin) such as caspi, chicle, natural rubber, crown gum, nispero, rosidinha, jelutong, guayule, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof. Elastomers constitute between about 10% to about 60% by weight and more commonly between about 35-40% by weight of the gum structure.

Additional useful polymers include: crosslinked polyvinyl pyrrolidone, polymethylmethacrylate; copolymers of lactic acid, polyhydroxyalkanoates, plasticized ethylcellulose, polyvinyl acetatephthalate and combinations thereof.

### Elastomer Plasticizers

The gum structure may contain elastomer solvents, also referred to herein as elastomer plasticizers, to aid in softening the elastomeric materials. Such elastomer solvents may include those elastomer solvents known in the art, for example, terpinene resins such as polymers of alpha-pinene, beta-pinene or d-limonene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum structure in amounts from about 2% to about 15%, and preferably from about 7% to about 11%, by weight of the gum structure.

### Plasticizers

The gum structure may also include plasticizers or softeners, which also fall under the Wax category described below, to provide a variety of desirable textures and consistency properties. Because of the low molecular weight of these ingredients, the plasticizers and softeners are able to penetrate the fundamental structure of the gum structure making it plastic and less viscous. Useful plasticizers and softeners include triacetin, medium chain triglycerides of non-hydrogenated, partially hydrogenated cotton seed oil, soybean oil, palm oil, palm kernel oil, coconut oil, safflower oil, tallow oil, cocoa butter, terepene resins derived from alpha-pinene, lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, sorbitan monostearate, tallow, propylene glycol, mixtures thereof, and the like, may also be incorporated into the gum structure. The plasticizers and softeners are generally employed in the gum structure in amounts up to about 20% by weight of the gum structure, and more specifically in amounts from about 9% to about 17%, by weight of the gum structure.

Plasticizers may also include hydrogenated vegetable oils, soybean oil and cottonseed oil which may be employed alone or in combination. These plasticizers provide the gum structure with good texture and soft chew characteristics. These plasticizers and softeners are generally employed in amounts from about 5% to about 14%, and more specifically in amounts from about 5% to about 13.5%, by weight of the gum structure.

### Fats

Suitable oils and fats include partially hydrogenated vegetable or animal fats, such as coconut oil, palm kernel oil, beef tallow, and lard, among others. These ingredients when used are generally present in amounts up to about 7%, and preferably up to about 3.5%, by weight of the gum structure.

### Waxes

In some embodiments, the gum structure may include wax. Waxes that are used may include synthetic waxes such as waxes containing branched alkanes and copolymerized with monomers such as, but not limited to, polypropylene and polyethylene and Fischer-Tropsch type waxes, petroleum waxes such as paraffin, and microcrystalline wax, and natural waxes such as beeswax, candellia, carnauba, and polyethylene wax, rice bran and petroleum.

It softens the polymeric mixture and improves the elasticity of the gum structure. When present, the waxes employed will have a melting point below about 60°C, and preferably between about 45°C and about 55°C. The low melting wax may be a paraffin wax. The wax may be present in the gum structure in an amount from about 6% to about 10%, and preferably from about 7% to about 9.5%, by weight of the gum structure.

In addition to the low melting point waxes, waxes having a higher melting point may be used in the gum structure in amounts up to about 5%, by weight of the gum structure. Such high melting waxes include beeswax, vegetable wax, candelilla wax, carnuba wax, most petroleum waxes, and the like, and mixtures thereof.

### Fillers

In some embodiments, gum structures formed using the methods according to the teachings of the invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, clay, titanium oxide, ground limestone, monocalcium phosphate, tricalcium phosphate, dicalcium phosphate, calcium sulfate and the like, and mixtures thereof. These fillers or adjuvants may be used in the gum structure in various amounts. The amount of filler, may be present in an amount from about zero to about 40%, and more specifically from about zero to about 30%, by weight of the gum structure. In some embodiments, the amount of filler will be from about zero to about 15%, more specifically from about 3 % to about 11%.

### Antioxidants

Antioxidants can include materials that scavenge free radicals. In some embodiments, antioxidants can include but are not limited to ascorbic acid, citric acid (citric acid may be encapsulated), rosemary oil, vitamin A, vitamin E, vitamin E phosphate, butylated hydroxytoluene (BHT), butylated hydroxyanisole (BHA), propyl gallate, tocopherols, di-alpha-tocopheryl phosphate, tocotrienols, alpha lipoic acid, dihydrolipoic acid, xanthophylls, beta cryptoxanthin, lycopene, lutein, zeaxanthin, astaxanthin, beta-carotene, carotenes, mixed carotenoids, polyphenols, flavonoids, and combinations thereof.

### Subsequent Ingredients

The gum structure may also include amounts of conventional additives selected from the group consisting of sweetening agents (bulk and high intensity sweeteners), softeners, emulsifiers, fillers, bulking agents (carriers, extenders, bulk sweeteners), flavoring agents (flavors, flavorings), coloring agents (colorants, colorings), functional ingredients, and the like, and mixtures thereof. Some of these additives may serve more than one purpose. For example, in sugarless gum structure, a sweetener, such as maltitol or other sugar alcohol, may also function as a bulking agent and particularly a water soluble bulking agent.

### Bulk Sweeteners

Suitable Bulk Sweeteners include monosaccharides, disaccharides and polysaccharides such as xylose, ribulose, glucose (dextrose), lactose, mannose, galactose, fructose (levulose), sucrose (sugar), maltose, invert sugar, partially hydrolyzed starch and corn syrup solids, sugar alcohols, randomly bonded glucose polymers such as those polymers distributed under the tradename LitesseTM which is the brand name for polydextrose and is manufactured by Danisco Sweeteners, Ltd. of 41-51 Brighton Road, Redhill, Surryey, RH1 6YS, United Kingdom; isomalt (a racemic mixture of alpha-D-glucopyranosyl-1,6-mannitol and alpha-D-glucopyranosyl-1,6-sorbitol manufactured under the tradename PALATINIT™ by Palatinit Sussungsmittel GmbH of Gotlieb-Daimler-Strause 12 a, 68165 Mannheim, Germany); maltodextrins; hydrogenated starch hydrolysates; hydrogenated hexoses; hydrogenated disaccharides; minerals, such as calcium carbonate, talc, titanium dioxide, dicalcium phosphate; celluloses; and mixtures thereof.

Suitable sugarless bulk sweeteners include sorbitol, xylitol, mannitol, galactitol, lactitol, maltitol, erythritol, isomalt and mixtures thereof. Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Delaware, are also useful.

In some embodiments, the gum structure may include a specific polyol composition including at least one polyol which is from about 30% to about 80% by weight of said gum structure, and specifically from 50% to about 60%. In some embodiments, such gum structures may have low hygroscopicity. The polyol composition may include any polyol known in the art including, but not limited to maltitol, sorbitol, erythritol, xylitol, mannitol, isomalt, lactitol and combinations thereof. LycasinTM which is a hydrogenated starch hydrolysate including sorbitol and maltitol, may also be used.

The amount of the polyol composition or combination of polyols used in the gum structure will depend on many factors including the type of elastomers used in the gum structure and the particular polyols used. For example, wherein the total amount of the polyol composition is in the range of about 40% to about 65% based on the weight of the gum structure, the amount of isomalt may be from about 40% to about 60% in addition to an amount of sorbitol from about 0 up to about 10%, more specifically, an amount of isomalt may be from about 45% to about 55% in combination with sorbitol from about 5% to about 10% based on the weight of the gum structure.

The polyol composition which may include one or more different polyols which may be derived from a genetically modified organism ("GMO") or GMO free source. For example, the maltitol may be GMO free maltitol or provided by a hydrogenated starch hydrolysate. For the purposes of this invention, the term "GMO-free" refers to a composition that has been derived from process in which genetically modified organisms are not utilized.

The sweetening agents which may be included in some gum structures formed using methods according to the teachings of the present invention may be any of a variety of sweeteners known in the art and may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

### High Intensity Sweeteners

Desirably, the sweetener is a high intensity sweetener such as aspartame, neotame, sucralose, monatin, and acesulfame potassium (Ace-K). The high intensity sweetener can be in an encapsulated form, a free form, or both.

In general, an effective amount of sweetener may be utilized to provide the level of sweetness desired, and this amount may vary with the sweetener selected. In some embodiments the amount of sweetener may be present in amounts from about 0.001% to about 3%, by weight of the gum, depending upon the sweetener or combination of sweeteners used. The exact range of amounts for each type of sweetener may be selected by those skilled in the art.

The sweeteners involved may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, steviosides, lo han quo, lo han quo derivatives, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame), N-[N-(3,3-dimethylbutyl)-L-α-aspartyl]-L-phenylalanine 1-methyl ester (Neotame), and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as thaumaoccous danielli (Thaumatin I and II) and talin; and
(f) the sweetener monatin (2-hydroxy-2-(indol-3-ylmethyl)-4-aminoglutaric acid) and its derivatives.

The intense sweetening agents may be used in many distinct physical forms well-known in the art to provide an initial burst of sweetness and/or a prolonged sensation of sweetness. Without being limited thereto, such physical forms include free forms, spray dried forms, powdered forms, beaded forms, encapsulated forms, and mixtures thereof. In one embodiment, the sweetener is a high intensity sweetener such as aspartame, sucralose, and acesulfame potassium (e.g., Ace-K or acesulfame-K). Several representative forms of encapsulated sweeteners and methods of encapsulating sweeteners are illustrated in U.S. Patent Nos. 7,244,454; 7,022,352; 6,759,066; 5,217,735 ;5,192,561; 5,164,210; 4,997,659 and 4,981,698 as well as U.S. Patent Application Publication Nos. 2007/0231424; 2004/0096544; 2005/0112236; and 2005/0220867.

The active component (e.g., sweetener), which is part of the delivery system, may be used in amounts necessary to impart the desired effect associated with use of the active component (e.g., sweetness). In general, an effective amount of intense sweetener may be utilized to provide the level of sweetness desired, and this amount may vary with the sweetener selected. The intense sweetener may be present in amounts from about 0.001% to about 3%, by weight of the composition, depending upon the sweetener or combination of sweeteners used. The exact range of amounts for each type of sweetener may be selected by those skilled in the art.

### Syrups

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the gum structure. Other syrups may include corn syrup and maltitol syrup.

### Flavorants

In some embodiments, flavorants may include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, apricot, banana, melon, apricot, ume, cherry, raspberry, blackberry, tropical fruit, mango, mangosteen, pomegranate, papaya and so forth. Other potential flavors whose release profiles can be managed include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below. In some embodiments, flavorants may chose from geraniol, linalool, nerol, nerolidal, citronellol, heliotropine, methyl cyclopentelone, ethyl vanillin, maltol, ethyl maltol, furaneol, alliaceous compounds, rose type compounds such as phenethanol, phenylacetic acid, nerol, linalyl esters, jasmine, sandlewood, patchouli, and/or cedarwood.

In some embodiments, other flavorings include aldehydes and esters such as cinnamyl acetate, cinnamaldehyde, citral diethylacetal, dihydrocarvyl acetate, eugenyl formate, p methylamisol, and so forth may be used. Generally any flavoring or food additive such as those described in Chemicals Used in Food Processing, publication 1274, pages 63 258, by the National Academy of Sciences, may be used. These may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha citral (lemon, lime), neral, i.e., beta citral (lemon, lime), decanal (orange, lemon), ethyl vanillin (vanilla, cream), heliotrope, i.e., piperonal (vanilla, cream), vanillin (vanilla, cream), alpha amyl cinnamaldehyde (spicy fruity flavors), butyraldehyde (butter, cheese), valeraldehyde (butter, cheese), citronellal (modifies, many types), decanal (citrus fruits), aldehyde C 8 (citrus fruits), aldehyde C 9 (citrus fruits), aldehyde C 12 (citrus fruits), 2 ethyl butyraldehyde (berry fruits), hexenal, i.e., trans 2 (berry fruits), tolyl aldehyde (cherry, almond), veratraldehyde (vanilla), 2,6 dimethyl 5 heptenal, .e., melonal (melon), 2,6 dimethyloctanal (green fruit), and 2 dodecenal (citrus, mandarin), cherry, grape, blueberry, blackberry, strawberry shortcake, and mixtures thereof.

In some embodiments, flavoring agents are used at levels that provide a perceptible sensory experience i.e. at or above their threshold levels. In other embodiments, flavoring agents are used at levels below their threshold levels such that they do not provide an independent perceptible sensory experience. At subthreshold levels, the flavoring agents may provide an ancillary benefit such as flavor enhancement or potentiation.

In some embodiments, a flavoring agent may be employed in either liquid form and/or dried form. When employed in the latter form, suitable drying means such as spray drying the liquid may be used. Alternatively, the flavoring agent may be absorbed onto water soluble materials, such as cellulose, starch, sugar, maltodextrin, gum arabic and so forth or may be encapsulated. In still other embodiments, the flavoring agent may be adsorbed onto silicas, zeolites, and the like.

In some embodiments, the flavoring agents may be used in many distinct physical forms. Without being limited thereto, such physical forms include free forms, such as spray dried, powdered, beaded forms, encapsulated forms, and mixtures thereof.

Illustrations of the encapsulation of flavors as well as other additional components can be found in the examples provided herein. Typically, encapsulation of a component will result in a delay in the release of the predominant amount of the component during consumption of a gum structure that includes the encapsulated component (e.g., as part of a delivery system added as an ingredient to the gum structure). In some embodiments, the release profile of the ingredient (e.g., the flavor, sweetener, etc.) can be managed by managing various characteristics of the ingredient, delivery system containing the ingredient, and/or the gum structure containing the delivery system and/or how the delivery system is made. For example, characteristics might include one or more of the following: tensile strength of the delivery system, water solubility of the ingredient, water solubility of the encapsulating material, water solubility of the delivery system, ratio of ingredient to encapsulating material in the delivery system, average or maximum particle size of ingredient, average or maximum particle size of ground delivery system, the amount of the ingredient or the delivery system in the gum structure, ratio of different polymers used to encapsulate one or more ingredients, hydrophobicity of one or more polymers used to encapsulate one or more ingredients, hydrophobicity of the delivery system, the type or amount of coating on the delivery system, the type or amount of coating on an ingredient prior to the ingredient being encapsulated, etc.

### Sensate Ingredients

Sensate compounds can include cooling agents, warming agents, tingling agents, effervescent agents, and combinations thereof. A variety of well known cooling agents may be employed. For example, among the useful cooling agents are included xylitol, erythritol, dextrose, sorbitol, menthane, menthone, ketals, menthone ketals, menthone glycerol ketals, substituted p menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p menthane, 2 mercapto cyclo decanone, hydroxycarboxylic acids with 2 6 carbon atoms, cyclohexanamides, menthyl acetate, menthyl salicylate, N,2,3 trimethyl 2 isopropyl butanamide (WS 23), N ethyl p menthane 3 carboxamide (WS 3), isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; and Menthol methyl ether, and menthyl pyrrolidone carboxylate among others. These and other suitable cooling agents are further described in the following U.S. patents: U.S. 4,230,688; 4,032,661; 4,459,425; 4,136,163; 5,266,592; 6,627,233.

In some embodiments, warming components may be selected from a wide variety of compounds known to provide the sensory signal of warming to the user. These compounds offer the perceived sensation of warmth, particularly in the oral cavity, and often enhance the perception of flavors, sweeteners and other organoleptic components. In some embodiments, useful warming compounds can include vanillyl alcohol n butylether (TK 1000) supplied by Takasago Perfumary Company Limited, Tokyo, Japan, vanillyl alcohol n propylether, vanillyl alcohol isopropylether, vanillyl alcohol isobutylether, vanillyl alcohol n aminoether, vanillyl alcohol isoamyleather, vanillyl alcohol n hexyleather, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropyl alcohol, iso amylalcohol, benzyl alcohol, glycerine, and combinations thereof.

In some embodiments, a tingling sensation can be provided. One such tingling sensation is provided by adding jambu, oleoresin, or spilanthol to some examples. In some embodiments, alkylamides extracted from materials such as jambu or sanshool can be included. Additionally, in some embodiments, a sensation is created due to effervescence. Such effervescence is created by combining an alkaline material with an acidic material. In some embodiments, an alkaline material can include alkali metal carbonates, alkali metal bicarbonates, alkaline earth metal carbonates, alkaline earth metal bicarbonates and mixtures thereof. In some embodiments, an acidic material can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates can be found in U.S. Patent No. 6,780,443.

Sensate components may also be referred to as "trigeminal stimulants" such as those disclosed in U.S. Patent Application No. 205/0202118. Trigeminal stimulants are defined as an orally consumed product or agent that stimulates the trigeminal nerve. Examples of cooling agents which are trigeminal stimulants include menthol, WS-3, N-substituted p-menthane carboxamide, acyclic carboxamides including WS-23, methyl succinate, menthone glycerol ketals, bulk sweeteners such as xylitol, erythritol, dextrose, and sorbitol, and combinations thereof. Trigeminal stimulants can also include flavors, tingling agents, Jambu extract, vanillyl alkyl ethers, such as vanillyl n-butyl ether, spilanthol, Echinacea extract, Northern Prickly Ash extract, capsaicin, capsicum oleoresin, red pepper oleoresin, black pepper oleoresin, piperine, ginger oleoresin, gingerol, shoagol, cinnamon oleoresin, cassia oleoresin, cinnamic aldehyde, eugenol, cyclic acetal of vanillin and menthol glycerin ether, unsaturated amides, and combinations thereof.

In some embodiments, sensate components are used at levels that provide a perceptible sensory experience i.e. at or above their threshold levels. In other embodiments, sensate components are used at levels below their threshold levels such that they do not provide an independent perceptible sensory experience. At subthreshold levels, the sensates may provide an ancillary benefit such as flavor or sweetness enhancement or potentiation.

### Potentiator Ingredients

Potentiators can include of materials that may intensify, supplement, modify or enhance the taste and/or aroma perception of an original material without introducing a characteristic taste and/or aroma perception of their own. In some embodiments, potentiators designed to intensify, supplement, modify, or enhance the perception of flavor, sweetness, tartness, umami, kokumi, saltiness and combinations thereof can be included.

In some embodiments, examples of suitable potentiators, also known as taste potentiators include, but are not limited to, neohesperidin dihydrochalcone, chlorogenic acid, alapyridaine, cynarin, miraculin, glupyridaine, pyridinium-betain compounds, glutamates, such as monosodium glutamate and monopotassium glutamate, neotame, thaumatin, tagatose, trehalose, salts, such as sodium chloride, monoammonium glycyrrhizinate, vanilla extract (in ethyl alcohol), sugar acids, potassium chloride, sodium acid sulfate, hydrolyzed vegetable proteins, hydrolyzed animal proteins, yeast extracts, adenosine monophosphate (AMP), glutathione, nucleotides, such as inosine monophosphate, disodium inosinate, xanthosine monophosphate, guanylate monophosphate, alapyridaine (N-(1-carboxyethyl)-6-(hydroxymethyl)pyridinium-3-ol inner salt, sugar beet extract (alcoholic extract), sugarcane leaf essence (alcoholic extract), curculin, strogin, mabinlin, gymnemic acid, hydroxybenzoic acids, 3-hydrobenzoic acid, 2,4-dihydrobenzoic acid, citrus aurantium, vanilla oleoresin, sugarcane leaf essence, maltol, ethyl maltol, vanillin, licorice glycyrrhizinates, compounds that respond to G-protein coupled receptors (T2Rs and TIRs) and taste potentiator compositions that impart kokumi, as disclosed in U.S. Patent No. 5,679,397 to Kuroda et al. "Kokumi" refers to materials that impart "mouthfulness" and "good body".

Sweetener potentiators, which are a type of taste potentiator, enhance the taste of sweetness. In some embodiments, exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, hydroxybenzoic acids, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and TIRs) and combinations thereof.

Additional examples of potentiators for the enhancement of salt taste include acidic peptides, such as those disclosed in U.S. Patent No. 6,974,597. Acidic peptides include peptides having a larger number of acidic amino acids, such as aspartic acid and glutamic acid, than basic amino acids, such as lysine, arginine and histidine. The acidic peptides are obtained by peptide synthesis or by subjecting proteins to hydrolysis using endopeptidase, and if necessary, to deamidation. Suitable proteins for use in the production of the acidic peptides or the peptides obtained by subjecting a protein to hydrolysis and deamidation include plant proteins, (e.g. wheat gluten, corn protein (e.g., zein and gluten meal), soybean protein isolate), animal proteins (e.g., milk proteins such as milk casein and milk whey protein, muscle proteins such as meat protein and fish meat protein, egg white protein and collagen), and microbial proteins (e.g., microbial cell protein and polypeptides produced by microorganisms).

The sensation of warming or cooling effects may also be prolonged with the use of a hydrophobic sweetener as described in U.S. Patent Application Publication 2003/0072842 A1.

### Food Acid Ingredients

Acids can include, but are not limited to acetic acid, adipic acid, ascorbic acid, butyric acid, citric acid, formic acid, fumaric acid, glyconic acid, lactic acid, phosphoric acid, malic acid, oxalic acid, succinic acid, tartaric acid, aspartic acid, benzoic acid, caffeotannic acid, iso-citric acid, citramalic acid, galacturonic acid, glucuronic acid, glyceric acid, glycolic acid, ketoglutaric acid, a-ketoglutaric acid, lactoisocitric acid, oxalacetic acid, pyruvic acid, quinic acid, shikimic acid, succinic acid, tannic acid, hydroxyacetic acid, suberic acid, sebacic acid, azelaic acid, pimelic acid, capric acid and combinations thereof.

### Emulsifiers

The gum structure may also include emulsifiers which aid in dispersing the immiscible components into a single stable system. The emulsifiers useful in this invention include glyceryl monostearate, lecithin, fatty acid monoglycerides, diglycerides, propylene glycol monostearate, methyl cellulose, alginates, carrageenan, xanthan gum, gelatin, carob, tragacanth, locust bean gum, pectin, alginates, galactomannans such as guar gum, carob bean gum, glucomannan, gelatin, starch, starch derivatives, dextrins and cellulose derivatives such as carboxy methyl cellulose, acidulants such as malic acid, adipic acid, citric acid, tartaric acid, fumaric acid, and the like, used alone and mixtures thereof. The emulsifier may be employed in amounts from about 2% to about 15%, and more specifically, from about 7% to about 11%, by weight of the gum structure.

### Colors

Coloring agents may be used in amounts effective to produce the desired color. The coloring agents may include pigments which may be incorporated in amounts up to about 6%, by weight of the gum. For example, titanium dioxide may be incorporated in amounts up to about 2%, and preferably less than about 1%, by weight of the gum structure. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p- sulf oniumbenzylamino) diphenylmethylene]-[1-(N-ethyl-N-p-sulfoniumbenzyl)-delta-2,5 - cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884.

As classified by the United States Food, Drug, and Cosmetic Act (21 C.F.R. 73), colors can include exempt from certification colors (sometimes referred to as natural even though they can be synthetically manufactured) and certified colors (sometimes referred to as artificial), or combinations thereof. In some embodiments, exempt from certification or natural colors can include, but are not limited to annatto extract, (El 60b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), -apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120); carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), and combinations thereof.

In some embodiments, certified colors can include, but are not limited to, FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), and combinations thereof. In some embodiments, certified colors can include FD&C aluminum lakes. These include of the aluminum salts of FD&C dyes extended on an insoluble substrate of alumina hydrate. Additionally, in some embodiments, certified colors can be included as calcium salts.

### Functional Ingredients

Additional additives including functional ingredients include physiological cooling agents, throat-soothing agents, spices, warming agents, tooth-whitening agents or other dental care ingredients, breath-freshening agents, vitamins, nutraceuticals, phytochemicals, polyphenols, antioxidants, active ingredients, minerals, caffeine, drugs and other actives may also be included in the gum composition. Such components may be used in amounts sufficient to achieve their intended effects and will be more fully discussed below.

### Breath Freshening Ingredients

Breath fresheners can include essential oils as well as various aldehydes, alcohols, and similar materials. In some embodiments, essential oils can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, and orange. In some embodiments, aldehydes such as cinnamic aldehyde and salicylaldehyde can be used. Additionally, chemicals such as menthol, carvone, iso-garrigol, and anethole can function as breath fresheners. Of these, the most commonly employed are oils of peppermint, spearmint and chlorophyll.

In addition to essential oils and chemicals derived from them, in some embodiments breath fresheners can include but are not limited to zinc citrate, zinc acetate, zinc fluoride, zinc ammonium sulfate, zinc bromide, zinc iodide, zinc chloride, zinc nitrate, zinc flurosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based materials, carbon-based materials, enzymes such as laccase, and combinations thereof.

In some embodiments, the release profiles of probiotics can be managed for a gum structure including, but not limited to lactic acid producing microorganisms such as Bacillus coagulans, Bacillus subtilis, Bacillus laterosporus, Bacillus laevolacticus, Sporolactobacillus inulinus, Lactobacillus acidophilus, Lactobacillus curvatus, Lactobacillus plantarum, Lactobacillus jenseni, Lactobacillus casei, Lactobacillus fermentum, Lactococcus lactis, Pedioccocus acidilacti, Pedioccocus pentosaceus, Pedioccocus urinae, Leuconostoc mesenteroides, Bacillus coagulans, Bacillus subtilis, Bacillus laterosporus, Bacillus laevolacticus, Sporolactobacillus inulinus and mixtures thereof. Breath fresheners are also known by the following trade names: Retsyn,™ Actizol,™ and Nutrazin.™ Examples of malodor-controlling compositions are also included in U.S. Patent No. 5,300,305 to Stapler et al. and in U.S. Patent Application Publication Nos. 2003/0215417 and 2004/0081713.

### Dental Care Ingredients

Dental care ingredients (also known as oral care ingredients) may include but are not limited to tooth whiteners, stain removers, oral cleaning, bleaching agents, desensitizing agents, dental remineralization agents, antibacterial agents, anticaries agents, plaque acid buffering agents, surfactants and anticalculus agents. Non-limiting examples of such ingredients can include, hydrolytic agents including proteolytic enzymes, abrasives such as hydrated silica, calcium carbonate, sodium bicarbonate and alumina, other active stain-removing components such as surface-active agents, including, but not limited to anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed as tartar control ingredients. In some embodiments, dental care ingredients can also include tetrasodium pyrophosphate and sodium tri-polyphosphate, sodium bicarbonate, sodium acid pyrophosphate, sodium tripolyphosphate, xylitol, sodium hexametaphosphate.

In some embodiments, peroxides such as carbamide peroxide, calcium peroxide, magnesium peroxide, sodium peroxide, hydrogen peroxide, and peroxydiphospate are included. In some embodiments, potassium nitrate and potassium citrate are included. Other examples can include casein glycomacropeptide, calcium casein peptone-calcium phosphate, casein phosphopeptides, casein phosphopeptide-amorphous calcium phosphate (CPP-ACP), and amorphous calcium phosphate. Still other examples can include papaine, krillase, pepsin, trypsin, lysozyme, dextranase, mutanase, glycoamylase, amylase, glucose oxidase, and combinations thereof.

Further examples can include surfactants such as sodium stearate, sodium ricinoleate, and sodium lauryl sulfate surfactants for use in some embodiments to achieve increased prophylactic action and to render the dental care ingredients more cosmetically acceptable. Surfactants can preferably be detersive materials which impart to the composition detersive and foaming properties. Suitable examples of surfactants are water-soluble salts of higher fatty acid monoglyceride monosulfates, such as the sodium salt of the monosulfated monoglyceride of hydgrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts of N-lauroyl, N-myristoyl, or N-palmitoyl sarcosine.

In addition to surfactants, dental care ingredients can include antibacterial agents such as, but not limited to, triclosan, chlorhexidine, zinc citrate, silver nitrate, copper, limonene, and cetyl pyridinium chloride. In some embodiments, additional anticaries agents can include fluoride ions or fluorine-providing components such as inorganic fluoride salts. In some embodiments, soluble alkali metal salts, for example, sodium fluoride, potassium fluoride, sodium fluorosilicate, ammonium fluorosilicate, sodium monofluorophosphate, as well as tin fluorides, such as stannous fluoride and stannous chloride can be included. In some embodiments, a fluorine-containing compound having a beneficial effect on the care and hygiene of the oral cavity, e.g., diminution of enamel solubility in acid and protection of the teeth against decay may also be included as an ingredient. Examples thereof include sodium fluoride, stannous fluoride, potassium fluoride, potassium stannous fluoride (SnF.sub.2 -KF), sodium hexafluorostannate, stannous chlorofluoride, sodium fluorozirconate, and sodium monofluorophosphate. In some embodiments, urea is included.

Further examples are included in the following U.S. patents and U.S. published patent applications: U.S. Patent Nos. 5,227,154 to Reynolds, 5,378,131 to Greenberg, 6,846,500 to Luo et al., 6,733,818 to Luo et al., 6,696,044 to Luo et al., 6,685,916 to Holme et al., 6,485,739 to Luo et al., 6,479,071 to Holme et al., 6,471,945 to Luo et al., U.S. Patent Publication Nos. 20050025721 to Holme et al., 2005008732 to Gebreselassie et al., and 20040136928 to Holme et al.

### Active Ingredients

Actives generally refer to those ingredients that are included in a delivery system and/or gum structure for the desired end benefit they provide to the user. In some embodiments, actives can include medicaments, nutrients, nutraceuticals, herbals, nutritional supplements, pharmaceuticals, drugs, and the like and combinations thereof.

Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, antineoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra™, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, antipyretics, appetite suppressants, expectorants, anti-anxiety agents, anti-ulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, anti-thrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use in some embodiments can include antacids, H2-antagonists, and analgesics. For example, antacid dosages can be prepared using the ingredients calcium carbonate alone or in combination with magnesium hydroxide, and/or aluminum hydroxide. Moreover, antacids can be used in combination with H2-antagonists.

Analgesics include opiates and opiate derivatives, such as Oxycontin™, ibuprofen, aspirin, acetaminophen, and combinations thereof that may optionally include caffeine.

Other drug active ingredients for use in embodiments can include anti-diarrheals such as Immodium™ AD, anti-histamines, anti-tussives, decongestants, vitamins, and breath fresheners. Also contemplated for use herein are anxiolytics such as Xanax™; anti-psychotics such as Clozaril™ and Haldol™; non-steroidal anti-inflammatories (NSAID's) such as ibuprofen, naproxen sodium, Voltaren™ and Lodine™, anti-histamines such as Claritin™, Hismanal™, Relafen™, and Tavist™; anti-emetics such as Kytril™ and Cesamet™; bronchodilators such as Bentolin™, Proventil™; anti-depressants such as Prozac™, Zoloft™, and Paxil™; anti-migraines such as Imigra™, ACE-inhibitors such as Vasotec™, Capoten™ and Zestril™; anti-Alzheimer's agents, such as Nicergoline™; and CaH-antagonists such as Procardia™, Adalat™, and Calan™.

The popular H2-antagonists which are contemplated for use in the present invention include cimetidine, ranitidine hydrochloride, famotidine, nizatidien, ebrotidine, mifentidine, roxatidine, pisatidine and aceroxatidine.

Active antacid ingredients can include, but are not limited to, the following: aluminum hydroxide, dihydroxyaluminum aminoacetate, aminoacetic acid, aluminum phosphate, dihydroxyaluminum sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminum mono-ordibasic calcium phosphate, tricalcium phosphate, potassium bicarbonate, sodium tartrate, sodium bicarbonate, magnesium aluminosilicates, tartaric acids and salts.

A variety of nutritional supplements may also be used as active ingredients including virtually any vitamin or mineral. For example, vitamin A, vitamin C, vitamin D, vitamin E, vitamin K, vitamin B6, vitamin B12, thiamine, riboflavin, biotin, folic acid, niacin, pantothenic acid, sodium, potassium, calcium, magnesium, phosphorus, sulfur, chlorine, iron, copper, iodine, zinc, selenium, manganese, choline, chromium, molybdenum, fluorine, cobalt and combinations thereof, may be used.

Examples of nutritional supplements that can be used as active ingredients are set forth in U.S. Patent Application Publication Nos. 2003/0157213 A1, 2003/0206993 and 2003/0099741 A1.

Various herbals may also be used as active ingredients such as those with various medicinal or dietary supplement properties. Herbals are generally aromatic plants or plant parts and or extracts thereof that can be used medicinally or for flavoring. Suitable herbals can be used singly or in various mixtures. Commonly used herbs include Echinacea, Goldenseal, Calendula, Rosemary, Thyme, Kava Kava, Aloe, Blood Root, Grapefruit Seed Extract, Black Cohosh, Ginseng, Guarana, Cranberry, Gingko Biloba, St. John's Wort, Evening Primrose Oil, Yohimbe Bark, Green Tea, Ma Huang, Maca, Bilberry, Lutein, and combinations thereof.

### Effervescing System Ingredients

An effervescent system may include one or more edible acids and one or more edible alkaline materials. The edible acid(s) and the edible alkaline material(s) may react together to generate effervescence.

In some embodiments, the alkaline material(s) may be selected from, but is not limited to, alkali metal carbonates, alkali metal bicarbonates, alkaline earth metal carbonates, alkaline earth metal bicarbonates, and combinations thereof. The edible acid(s) may be selected from, but is not limited to, citric acid, phosphoric acid, tartaric acid, malic acid, ascorbic acid, and combinations thereof. In some embodiments, an effervescing system may include one or more other ingredients such as, for example, carbon dioxide, oral care ingredients, flavorants, etc.

For examples of use of an effervescing system in a gum, refer to U.S. Provisional Patent No. 60/618,222 filed October 13, 2004, and entitled "Effervescent Pressed Confectionery Tablet Compositions. Other examples can be found in U.S. Patent No. 6,235,318.

### Appetite Suppressor Ingredients

Appetite suppressors can be ingredients such as fiber and protein that function to depress the desire to consume food. Appetite suppressors can also include benzphetamine, diethylpropion, mazindol, phendimetrazine, phentermine, hoodia (P57), Olibra,™ ephedra, caffeine and combinations thereof. Appetite suppressors are also known by the following trade names: Adipex,™ Adipost,™ Bontril™ PDM, Bontril™ Slow Release, Didrex,™ Fastin,™ Ionamin,™ Mazanor,™ Melfiat,™ Obenix,™ Phendiet,™ Phendiet-105,™ Phentercot,™ Phentride,™ Plegine,™ Prelu-2,™ Pro-Fast,™ PT 105,™ Sanorex,™ Tenuate,™ Sanorex,™ Tenuate,™ Tenuate Dospan,™ Tepanil Ten-Tab,™ Teramine,™ and Zantryl.™ These and other suitable appetite suppressors are further described in the following U.S. patents: U.S. 6,838,431 to Portman, U.S. 6,716,815 to Portman, U.S. 6,558,690 to Portman, U.S. 6,468,962 to Portman, U.S. 6,436,899 to Portman.

### Micronutrient Ingredients

Micronutrients can include materials that have an impact on the nutritional well being of an organism even though the quantity required by the organism to have the desired effect is small relative to macronutrients such as protein, carbohydrate, and fat. Micronutrients can include, but are not limited to vitamins, minerals, enzymes, phytochemicals, antioxidants, and combinations thereof.

In some embodiments, vitamins can include fat soluble vitamins such as vitamin A, vitamin D, vitamin E, and vitamin K and combinations thereof. In some embodiments, vitamins can include water soluble vitamins such as vitamin C (ascorbic acid), the B vitamins (thiamine or B1, riboflavoin or B2, niacin or B3, pyridoxine or B6, folic acid or B9, cyanocobalimin or B12, pantothenic acid, biotin), and combinations thereof.

In some embodiments minerals can include but are not limited to sodium, magnesium, chromium, iodine, iron, manganese, calcium, copper, fluoride, potassium, phosphorous, molybdenum, selenium, zinc, and combinations thereof.

In some embodiments micronutrients can include but are not limited to L-carnitine, choline, coenzyme Q10, alpha-lipoic acid, omega-3-fatty acids, pepsin, phytase, trypsin, lipases, proteases, cellulases, and combinations thereof.

In some embodiments phytochemicals can include but are not limited to cartotenoids, chlorophyll, chlorophyllin, fiber, flavanoids, anthocyanins, cyaniding, delphinidin, malvidin, pelargonidin, peonidin, petunidin, flavanols, catechin, epicatechin, epigallocatechin, epigallocatechingallate (EGCG), theaflavins, thearubigins, proanthocyanins, flavonols, quercetin, kaempferol, myricetin, isorhamnetin, flavononeshesperetin, naringenin, eriodictyol, tangeretin, flavones, apigenin, luteolin, lignans, phytoestrogens, resveratrol, isoflavones, daidzein, genistein, glycitein, soy isoflavones, and combinations thereof.

### Mouth Moistening Ingredients

Mouth moisteners can include, but are not limited to, saliva stimulators such as acids and salts and combinations thereof. In some embodiments, acids can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. In some embodiments, salts can include sodium chloride, calcium chloride, potassium chloride, magnesium chloride, sea salt, sodium citrate, and combinations thereof.

Mouth moisteners can also include hydrocolloid materials that hydrate and may adhere to oral surface to provide a sensation of mouth moistening. Hydrocolloid materials can include naturally occurring materials such as plant exudates, seed confectionerys, and seaweed extracts or they can be chemically modified materials such as cellulose, starch, or natural confectionery derivatives. In some embodiments, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, bacterial gums, and combinations thereof. Additionally, in some embodiments, modified natural gums such as propylene glycol alginate, carboxymethyl locust bean gum, low methoxyl pectin, and their combinations can be included. In some embodiments, modified celluloses can be included such as microcrystalline cellulose, carboxymethlcellulose (CMC), methylcellulose (MC), hydroxypropylmethylcellulose (HPCM), and hydroxypropylcellulose (MPC), and combinations thereof.

Similarly, humectants which can provide a perception of mouth hydration can be included. Such humectants can include, but are not limited to glycerol, sorbitol, polyethylene glycol, erythritol, and xylitol. Additionally, in some embodiments, fats can provide a perception of mouth moistening. Such fats can include medium chain triglycerides, vegetable oils, fish oils, mineral oils, and combinations thereof.

### Throat Care Ingredients

Throat soothing ingredients can include analgesics, anesthetics, demulcents, antiseptic, and combinations thereof. In some embodiments, analgesics/anesthetics can include menthol, phenol, hexylresorcinol, benzocaine, dyclonine hydrochloride, benzyl alcohol, salicyl alcohol, and combinations thereof. In some embodiments, demulcents can include but are not limited to slippery elm bark, pectin, gelatin, and combinations thereof. In some embodiments, antiseptic ingredients can include cetylpyridinium chloride, domiphen bromide, dequalinium chloride, and combinations thereof.

In some embodiments, antitussive ingredients such as chlophedianol hydrochloride, codeine, codeine phosphate, codeine sulfate, dextromethorphan, dextromethorphan hydrobromide, diphenhydramine citrate, and diphenhydramine hydrochloride, and combinations thereof can be included.

In some embodiments, throat soothing agents such as honey, propolis, aloe vera, glycerine, menthol and combinations thereof can be included. In still other embodiments, cough suppressants can be included. Such cough suppressants can fall into two groups: those that alter the consistency or production of phlegm such as mucolytics and expectorants; and those that suppress the coughing reflex such as codeine (narcotic cough suppressants), antihistamines, dextromethorphan and isoproterenol (non-narcotic cough suppressants). In some embodiments, ingredients from either or both groups can be included.

In still other embodiments, antitussives can include, but are not limited to, the group consisting of codeine, dextromethorphan, dextrorphan, diphenhydramine, hydrocodone, noscapine, oxycodone, pentoxyverine and combinations thereof. In some embodiments, antihistamines can include, but are not limited to, acrivastine, azatadine, brompheniramine, chlorpheniramine, clemastine, cyproheptadine, dexbrompheniramine, dimenhydrinate, diphenhydramine, doxylamine, hydroxyzine, meclizine, phenindamine, phenyltoloxamine, promethazine, pyrilamine, tripelennamine, triprolidine and combinations thereof. In some embodiments, non-sedating antihistamines can include, but are not limited to, astemizole, cetirizine, ebastine, fexofenadine, loratidine, terfenadine, and combinations thereof.

In some embodiments, expectorants can include, but are not limited to, ammonium chloride, guaifenesin, ipecac fluid extract, potassium iodide and combinations thereof. In some embodiments, mucolytics can include, but are not limited to, acetylcycsteine, ambroxol, bromhexine and combinations thereof. In some embodiments, analgesic, antipyretic and anti-inflammatory agents can include, but are not limited to, acetaminophen, aspirin, diclofenac, diflunisal, etodolac, fenoprofen, flurbiprofen, ibuprofen, ketoprofen, ketorolac, nabumetone, naproxen, piroxicam, caffeine and mixtures thereof. In some embodiments, local anesthetics can include, but are not limited to, lidocaine, benzocaine, phenol, dyclonine, benzonotate and mixtures thereof.

In some embodiments nasal decongestants and ingredients that provide the perception of nasal clearing can be included. In some embodiments, nasal decongestants can include but are not limited to phenylpropanolamine, pseudoephedrine, ephedrine, phenylephrine, oxymetazoline, and combinations thereof. In some embodiments ingredients that provide a perception of nasal clearing can include but are not limited to menthol, camphor, borneol, ephedrine, eucalyptus oil, peppermint oil, methyl salicylate, bornyl acetate, lavender oil, wasabi extracts, horseradish extracts, and combinations thereof. In some embodiments, a perception of nasal clearing can be provided by odoriferous essential oils, extracts from woods, confectioneries, flowers and other botanicals, resins, animal secretions, and synthetic aromatic materials.

In some embodiments, optional or functional ingredients can include breath fresheners, dental care components, actives, herbals, effervescing systems, appetite suppressors, vitamins, micronutrients, mouth moistening components, throat care components, energy boosting agents, concentration boosting agents, and combinations thereof.

In some embodiments, the modified release component includes at least one ingredient selected from the group comprising flavors, sweeteners, sensates, breath fresheners, dental care components, actives, herbals, effervescing systems, appetite suppressors, potentiators, food acids, micronutrients, mouth moistening components, throat care components, and combinations thereof. These ingredients can be in encapsulated form, in free form, or both.

### EXAMPLES OF FINISHED CHEWING GUM COMPOSITIONS

**Table 1: Chewing Gum Composition**

| Component | % by weight | | | | | | | |
|---|---|---|---|---|---|---|---|---|
| | Formula 1 | Formula 2 | Formula 3 | Formula 4 | Formula 5 | Formula 6 | Formula 7 | Formula 8 |
| Gum base* | 28-42 | 28-42 | 28-42 | 28-42 | 28-42 | 28-42 | 28-42 | 28-42 |
| Lecithin | 0.25 | 0.25 | 0.05 | 0.05 | 0.05 | 0.05 | 0.05 | 0.05 |
| Maltitol | 52-55 | 45-50 | 0 | 50-54 | 52-57 | 45-55 | 47-52 | 0 |
| Sorbitol | 0 | 0-10 | 0 | 0-5 | 0-5 | 5-10 | 0-5 | 0 |
| Lycasin™ | 0 | 0 | 0 | 0.25 | 0.25 | 0.25 | 0.25 | 0 |
| Erythritol | 0 | 0 | 15-30 | 0 | 0 | 0 | 0 | 0 |
| Sugar | 0 | 0 | 20-40 | 0 | 0 | 0 | 0 | 30-55 |
| Corn Syrup | 0 | 0 | 2-15 | 0 | 0 | 0 | 0 | 2-15 |
| Flavors | 2.50 | 2.50 | 2.26 | 2.26 | 2.26 | 2.50 | 2.50 | 2.50 |
| Cooling agent | 0.08 | 0.08 | 0 | 0 | 0 | 0.08 | 0.08 | 0.08 |
| Acidulants | 1.2 | 1.2 | 0 | 0 | 0 | 1.2 | 1.2 | 1.2 |
| Intense sweetener | 3.40 | 3.40 | 1.70 | 3.40 | 3.40 | 3.40 | 3.40 | 0 |

| | | | | | | | | |
|---|---|---|---|---|---|---|---|---|
| *gum base may include 3% to 11% by weight of a filler such as, for example, talc, dicalcium phosphate, and calcium carbonate (the amount of filler in the gum base is based on the weight percent of the gum region composition, for example, in the above compositions Y-FF, if a gum region composition includes 5% filler, the amount of gum base will be 5% less than the range recited in the table, i.e., from 23-37%) | | | | | | | | |

The compositions for the chewing gums are prepared by first combining talc, where present, with the gum base under heat at about 85°C. This combination is then mixed with the bulk sweeteners, lecithin, and sweetener syrups for six minutes. The flavor blends which include a pre-mix of the flavors and cooling agents are added and mixed for 1 minute. Finally, the acids and intense sweeteners are added and mixed for 5 minutes.

In addition to the various chewing gums mentioned above, it should be appreciated that the below discussed systems and methods may be used to form and size confectionary or candy, combinations of gum ingredients with confectionary or candy ingredients, and combinations of gum with confectionary or candy, as disclosed in U.S. Patent Publication No. 2008/0166449, International Publication No. WO 2011/044373, and International Publication No. WO 2010/092480.

### GUM MIXERS GENERALLY

The present invention may be used to form and/or cool or heat a gum mass or structure, including various ingredients. Any conventional mixers can be used to mix the gum structure, although different types of mixers used may affect the feed characteristics into the new gum forming system 106 of FIG. 1. For example, different types of preconditioning and low shear extruders may be employed to modify the raw mixer output and generate a regular stream and/or a continuous stream. In either event, it is contemplated that the new gum forming system 106 is readily usable with a variety of mixing systems employed in the industry.

The mixing system 102 can include one or more mixers depending on a formulation of a desired gum structure. The one or more mixers can provide different types of mixing depending on the ingredients being mixed or the condition of the ingredients being mixed. Two primary types of mixing include distributive and dispersive mixing. Dispersive mixing is typically high shear mixing that breaks up individual ingredients and aggregations of ingredients within a composition into smaller pieces. Distributive mixing is typically lower shear mixing than distributive mixing and is used to distribute the individual ingredients throughout the composition to provide a more uniform composition. Dispersive and distributive mixing are more thoroughly described and discussed in U.S. Patent No. 5,562,936.

The mixers of the mixing system 102 may be a continuous mixer or a batch mixer. As used herein, "a continuous mixer", which may also be referred to herein as a "continuous processor", is processing equipment in which the various ingredients used to prepare an effluent are fed substantially continuously into the device while those ingredients are being mixed and removed or ejected from the mixing system. For example, in a continuous mixing extruder, ingredients are substantially continuously introduced through various upstream and downstream feed ports, all the while, the screws, blades, pins, paddles or other mixing elements continue to convey the mixture through the system, all the while mixing the same. At a downstream portion of the extruder, the wholly or partly combined downstream portion of the mass is ejected from the extruder by the force of the mass substantially continually or continually being conveyed. The ejection of the mass from the extruder may be facilitated by inclusion of an external or supplemental pump.

A continuous mixer may provide dispersive mixing, distributive mixing or a combination of both dispersive mixing and distributive mixing. For example, a continuous mixer in the form of an extruder can have all dispersive mixing elements, all distributive mixing elements, or a combination of dispersive mixing elements and distributive mixing elements. Due to the characteristics and requirements of mixing gum compositions, the dispersive mixing elements are typically upstream of the distributive mixing elements, however, continuous mixers are not limited to that arrangement.

As used herein, "a batch mixer", which may also be referred to herein as a "batch processor", is processing equipment used to prepare a composition that once the composition is prepared the composition is ejected from the equipment all at once or at least discrete noncontinuous portions of the composition will be ejected at intermittent intervals, but the composition is not continuously ejected during mixing. Typically, individual ingredients or portions of the individual ingredients used to prepare the composition are fed into the device substantially all at one time or in a predetermined temporal sequence in discrete amounts. Individual ingredients added to a batch mixer may be added at different times throughout the mixing cycle such that some ingredients have a residence time substantially equal to the entire length of the mixing cycle while other ingredients have a residence time for only a fraction of the entire length of the mixing cycle. Further, individual ingredients that are used for different purposes throughout the mixing cycle may have different discrete portions of the ingredient added at different times throughout the mixing process. For example, one ingredient may be used to facilitate compounding elastomer as well as may be used as a bulking agent. Such an ingredient may have a first portion added at the beginning of the mixing cycle such that it has a residence time equal to the entire mixing time while a second portion of the same ingredient may be added later in the mixing cycle such that the second portion has a residence time less than the entire mixing time.

A batch mixer will typically provide either dispersive mixing or distributive mixing. A batch mixer used in practicing the present invention could be configured to provide both dispersive and distributive mixing. For example, it is contemplated that a kettle mixer that includes internal blades could be configured to shift between dispersive and distributive mixing by modifying the pitch or orientation of the blades. Alternatively, the kettle mixer could include multiple sets of blades, such that one set is configured for dispersive mixing while another set is configured for distributive mixing. It is contemplated the mixer would most likely only use one set of the blades at a time to provide one type of mixing at a time.

The gum mixing system 102 may include one continuous mixer or one batch mixer. In other embodiments, the gum mixing system 102 may include one or more continuous mixers and/or one or more batch mixers arranged in series and/or parallel. Various parallel and series mixing system arrangements are described in U.S. Patent Application Nos. 12/338,428 and 12/338,682, which are assigned to the present assignee.

Referring more specifically now to FIG. 1, a gum structure output 130 from the gum mixing system 102 may be generally irregular or otherwise a non-uniform thickness of material. The gum forming system 106 can process an elastomer or a finished gum or any gum structures therebetween including any number of gum base ingredients and/or gum ingredients. Although, the gum structure output 130 can be any gum structure, in this embodiment, the gum structure output 130 is preferably a finished gum. Depending on a formulation of the gum structure, the non-uniform gum structure output 130 can be fed as a gum mass 182 directly into the gum forming system 106 to form a substantially flat gum sheet 184 having a desired uniform thickness. However, as shown in FIG. 1, the non-uniform gum structure output 130 is further processed into a somewhat uniform shape or width prior to entering the gum forming system 106 as the gum mass 182.

In FIG. 1, the gum structure output 130 is preformed into loaves 132 before being further formed into the continuous web or sheet 184 having a desired width and thickness in the gum forming system 106. As such, this embodiment is shown with the optional loafing machine 104 upstream of the forming system 106. The loafing machine 104 is shown as a low-shear extruder 134. The extruder 134 forces the gum structure output 130 through a forming die, thereby forming a loaf output 136 that may be periodically cut off into separate loaves 132 (alternatively a continuous stream of a generally uniform size may be provided without cutting into loaves). The loaves 132 may have a slight parallelogram shape or be of slight shape variations in width and length, but the thickness of the individual loaves 132 is preferably between about 12 and 127 mm thick (vertically) with the length and width being between about 100 mm and 460 mm. Typically, the output orifice of loafing extruder 104 is relatively large enough so as to be considered "low shear" as opposed to sizing type extruders of the prior art. As a result, a maximum thickness of the output is greater than about 25 mm (e.g. between 25-50 mm) and/or a width, in exemplary embodiment of less than 460 mm. Further, the shape need not be perfectly rectangular (or trapezoidal). Such a loafing machine system is disclosed in U.S. Patent Application No. 12/352,110, which is assigned to the present assignee. Forming the gum structure output 130 into loaves 132 can provide flexibility to a gum line. For example, the downstream forming process may be performed at a later time, or the loaves can be transferred to a different location for further processing or conditioning.

The loaves 132 are then transferred to the gum forming system 106, wherein the loaves 132 are compressed into a desired thickness. Alternatively, and as discussed previously, the gum structure output 130 can be fed directly into the gum forming system 106 without being formed into the loaves 132. Yet in a different embodiment, the mixing system 102 may include an extruder equipped with a forming die having a large output orifice (which minimizes shear stress within the forming die and temperature in the resulting rope) to output a gum rope having a somewhat uniform shape. For example, the forming die may be configured to output a continuous web or rope of gum having a thickness greater than about 20 mm. The forming die may be adjustable to produce various widths of the continuous web according to a desired width of the gum sheet.

As shown in FIG. 1, the first illustrated embodiment of the overall system 100 notably does not include a sizing type extruder or multiple rollers for progressively reducing thickness. Thus, one feature and advantage according to some embodiments is that the gum forming system 106 can be used to eliminate sizing type extruder systems that may require high shear in extruding the gum; and can also be used to eliminate the traditional series of size reduction rollers that have been previously used to progressively reduce the thickness from the sizing type extruder. Conventional gum lines including such sizing type extruder are limited to producing a gum sheet having a maximum width of about 220 mm to 460 mm due to the high shear nature of the process.

In forming the continuous sheet 184 using the gum forming system 106, there is no longer a need to forcibly extrude gum through a defined width rectangular orifice. As a result, one advantage that can be realized is that shear force exerted on the gum may be significantly reduced. As a further result, certain shear sensitive ingredients may remain much more intact, such that either the resulting product may have more shear sensitive ingredient intact in the final product, or a smaller quantity of shear sensitive ingredients need to be added during gum mixing operations, thereby invoking a potential for costs savings or enhanced chewing gum characteristics for the consumer. Shear and temperature sensitive ingredients such as those described above including particular encapsulated sweeteners, flavors and various active pharmaceutical ingredients are contemplated to particularly benefit from the potentially lower shear processing.

Further, due to the potentially low shear nature of the gum forming system 106, the gum forming system 106 may be operated with substantially less power, for example, potentially less than approximately 1/3 of the energy required to run a conventional rolling and scoring line including a sizing type extruder and series of size reduction rollers, thereby potentially resulting in significant energy savings. Further, by replacing the sizing type extruder and series of size reduction rollers with the gum forming system 106, the embodiment of the present invention can substantially reduce the number of moving parts, which can then minimize any down time from malfunctioning moving parts.

The gum forming system 106 shown in FIG. 1 includes a pair of moving rollers 142, which include an upper roller 144 and a lower roller 146. The rollers 142 are externally driven, for example by an operably coupled motor. In an exemplary embodiment, each of the rollers 142 is provided with a motor, such that a rotational speed of each roller 142 can be controlled independently.

The hopper 154 may be used for upstream surge control, capacity and feed control. The hopper 154 constrains, accumulates, and feeds the gum mass 182 into an inlet region 164 generally between the rollers 142. The hopper 154 can be configured to receive the gum structure output 130, the loaves 132, and/or the somewhat uniform web of gum structure having various web width, and accumulate the received gum as the non-uniformly shaped gum mass 182. The width of the inlet region 164 of the hopper 154 may be adjusted according to a desired width of the gum sheet 184.The upper and lower rollers 144, 146 may be configured to accommodate the gum sheet 184 at a width of between about 25 mm to 1 m, or perhaps more. It may be desirable to have a wider sheet of the gum of greater than about 0.6 m in width so as to be able to provide a substantial gum mass volume that can operate at slower speeds while generating sufficient output.

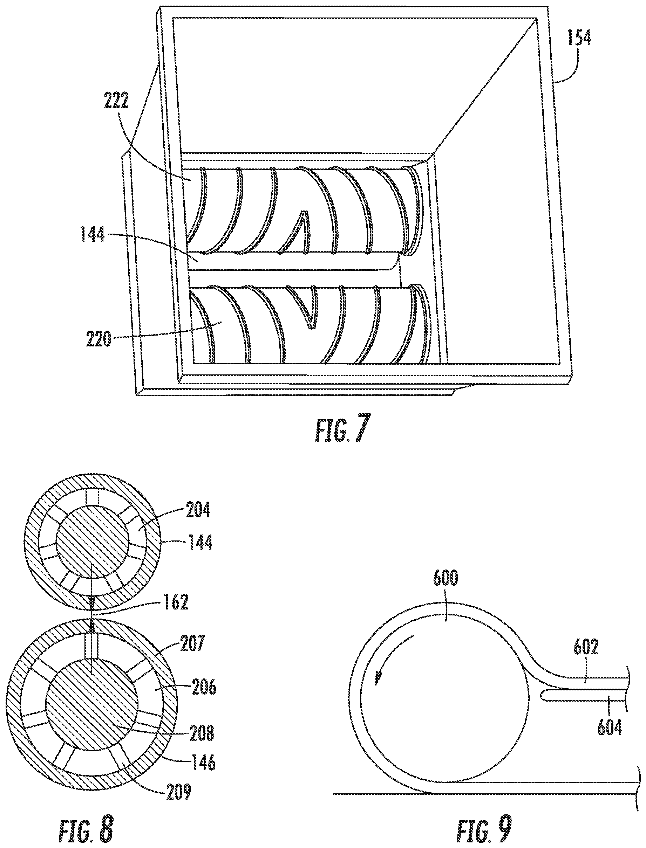

FIG. 7 shows a top view of the hopper 154. As shown, the hopper 154 optionally includes a pair of feed rollers 220, 222 to facilitate pulling of the gum mass 182 through the hopper 154 to the pair of rollers 142. The feed rollers 220, 222 of this embodiment are auger rollers having helical blades 221, 223, which are configured to counter-rotate such that the feed roller 220 rotates counter clockwise and the feed roller 222 rotates clockwise when viewed from a left side 224 of the hopper 154 in FIG. 7. When the gum mass 182, which can begin as loaves 132 or irregular outputs 130 from a mixer or any other shape, is fed into the hopper 154, the gum mass 182 drops toward the feed rollers 220, 222 via gravity. Then, the feed rollers 220, 222 counter rotate inwardly toward the center, thereby moving the gum mass 182 between the feed rollers 220, 222 and toward the upper roller 144 and the inlet region 164. Further, the helical blades 221, 223 of the feed rollers 220, 222 moves the gum mass 182 along the axis of rotation, thereby directing the gum mass 182 toward each end of the feed rollers 220, 222, as the gum mass 182 is fed between the feed rollers 220, 222. As such, the gum mass 182 is distributed to provide a desired width of exiting gum mass 182 corresponding to a width of the feed rollers 220, 222.

The gum mass 182 is then guided by the upper roller 144 toward the lower roller 146, wherein the counter rotating upper roller 144 and lower roller 146 pull the gum mass 182 between the rollers 144, 146 to form and size the gum mass 182 into the gum sheet 184 as will be explained in more detail below. Alternatively, the hopper 154 may include more than a pair of feeding rollers to further facilitate feeding and widening of the gum mass 182 in the hopper 154.

Here, the upper roller 144 having a vertical axis 148 and the lower roller 146 having a vertical axis 150 are arranged such that the upper and lower rollers 144, 146 are horizontally offset by a horizontal offset spacing 152. The pair of rollers are also referred to as "forming rollers" or "sizing rollers" herein. As can be contemplated by the terms "upper roller" and "lower roller", and as shown in FIG. 1, the pair of rollers 142 of this embodiment are also vertically offset. More specifically, the upper roller 144 has a horizontal axis 156, which is horizontally offset by an offset 160 from a horizontal axis 158 of the lower roller 146. The upper roller 144 and the lower roller 146 are arranged such that a spacing or gap 162 is formed between the rollers 144, 146, which allows the gum to pass between the rollers. The pair of rollers 144, 146 and the spacing 162 are configured to apply a compressive or deforming force onto the gum mass 182 to form the gum sheet 184 having a generally uniform thickness corresponding to the spacing 162. The term "a generally uniform thickness" of the gum sheet 184 is used broadly herein to describe a cross sectional cross web shape of the gum sheet 184 upon exiting the pair of rollers 142.

The upper roller 144 and the lower roller 146 are configured to counter rotate to pull the gum mass 182 through the gap 162. This pulling or dragging of the mass 182 by the rollers 144, 146 results in a drag flow of the gum through the gap 162. In FIG. 1, the upper roller 144 rotates in a counter clockwise direction 178, while the lower roller 146 rotates in a clockwise direction 180. As discussed above, the feed rollers 220, 222 convey a gum mass 182 entering and in the hopper 154 toward the rollers 144, 146. As the gum mass 182 is fed between the rollers 144, 146, the counter rotating rollers 144, 146 pull the gum mass 182 through the spacing 162. In some embodiments, the feed rollers 220, 222 are designed to push the gum mass 182 toward the spacing 162 to facilitate the pulling of the gum by the rollers 144, 146. As the gum mass 182 is pulled through the minimum distance of the gap 162, which can be as narrow as 0.1 mm, the gum mass 182 mass is deformed between the rollers 144, 146, with this deforming/sizing being substantially extensional.

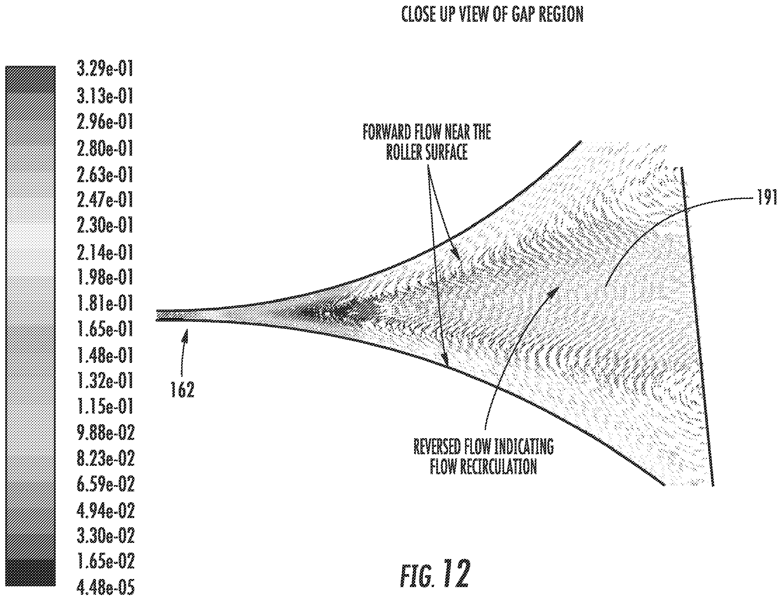

Immediately prior to being sized by the rollers 142 (i.e., exiting the hopper 154), the gum mass 182 is substantially unshaped. It should be noted that an "unshaped" gum mass or sheet 184 may be defined as any mass or sheet 184 that is not, in its current state, sized or formed via extrusion, deforming, or any other means, though the gum mass may have been sized or formed in such a manner prior to being in this current state. In other words, dimension of the gum sheet 184 are created independently of the shape and dimensions of the unshaped gum mass 182. It should be noted however that the width of the exit from the hopper 154, the gap 162, and the sheet 184 may all be substantially the same. In addition, an exemplary embodiment of the gum mass 182 may include a thickness dimension of greater than 3 times the gum sheet 184, and more particularly 10-70 times the gum sheet 184, at the inlet area 164. In an exemplary embodiment similar to that which is shown in Figure 12, a thickness of the gum mass 182 immediately upstream of the gap 162 is 500-800mm, and a thickness of the gum sheet 184 immediately downstream of the gap 162 is 0.3 - 10 mm.

As the gum mass 182 leaves the hopper 154 and is pulled through the gap 162, a reverse directional flow 191 (i.e. back flow) occurs at the inlet area 164 between the hopper 154 and a minimum distance of the gap 162. This reverse flow 191 is shown in Figure 12, wherein a direction of flow is from the hopper 154 towards the minimum distance of the gap 162. As is illustrated in Figure 12, a pulling of the gum mass 182 through the minimum distance of the gap 162 both sizes the gum mass 182 into the gum sheet 184, and causes at least 30% of a cross-sectional area of the gum mass 182 between minimum distance of the gap 162 and the hopper 154 to be deflected away from the direction of flow towards the minimum distance of the gap 162 (see the arrows in Figure 12). This back flow 191 occurs at a relative interior of the gum mass 182, which increases in dimension in a direction away from the gap 162 (i.e. at an area closer to the hopper 154).

More specifically, and as is shown in Figure 12, there is no or insubstantial deviation in flow direction just upstream of the gap 162. However, in areas of the mass 182 further upstream of the gap 162 and closer to the hopper 154, a percentage of the gum mass 182 deflected away from the direction of flow (i.e. the back flow 191) increases. This area includes percentages of backflow 191 of 30% to 75% of a cross-sectional area of the gum mass 182 (with the increase occurring upstream of the gap 162 in a direction of the hopper 154), and more specifically 48% to 65% of a cross-sectional area of the gum mass 182. In an exemplary embodiment, backflow 191 as measured at a location along a gap center line where the separation between the rollers is 10 to 50 times the gap width will be at least 30% and at most 75%.

Back flow 191 as described above can be beneficial in that it allows for a better, more thorough mixing of the ingredients in the gum mass 182. In fact, the back flow 191 may allow for removal or reduction of gum mixing systems upstream of the forming or sizing station 106.

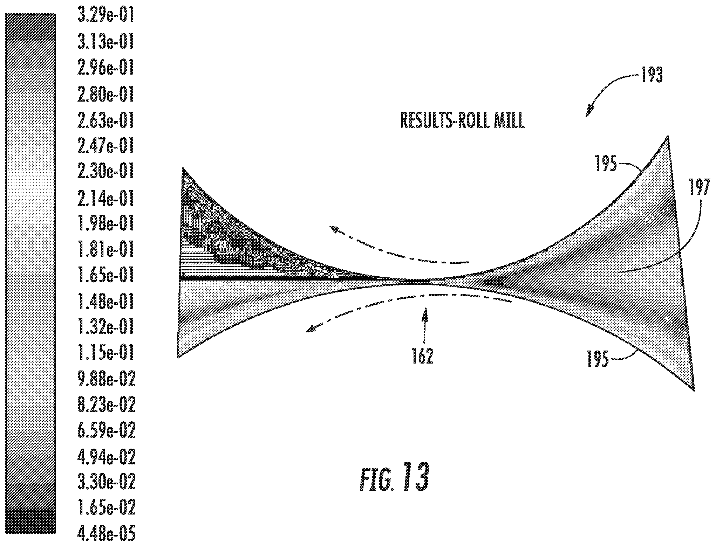

In addition to creation of the back flow 191 at the inlet area 164, the pulling of the gum mass towards the minimum distance of the gap 162 between the sizing roller 142 further creates variation 193 in velocity profile in the gum mass 182. This variation is shown in Figure 13, wherein surface areas 195 of the gum mass 182 in proximity to the rollers 144, 146 are pulled by the rollers 144, 146 at a greater velocity than more internal areas 197 of the gum mass 182 disposed distal to the rollers 144, 146.

More specifically, and as shown in the exemplary embodiment of Figure 13, gum at the surface areas 195 may flow at a velocity such as but not limited to five times that of the gum at the more internal areas 197. It is notable that actual velocities found in the system 106 will depend on the desirable velocity at which the system106 itself is run. For example, if the various conveyers and rollers in the system 106 are run such that the gum mass 182 includes an exemplary speed of 0.25 meters/second, the variation in velocities within the mass 182 upstream of the gap 162 will be from around 0.3 meters/second at the surface areas 195 to less than .0165 meters/second at the more internal areas 197.

Similarly to the back flow 191 discussed above, this variation 193 velocity profile can be beneficial in that it allows for a better, more thorough mixing of the ingredients in the gum mass 182.

The pair of rollers 142 compresses and deforms the gum mass 182 as it passes between the upper and lower rollers 144, 146 to provide a generally uniform thickness, such that the thickness of the gum sheet 184 is preferably within about 20% cross-web variance, more preferably within about 10% cross-web variance, and most preferably within about a 5% cross-web variance, or less. For example, when a desired thickness of the gum sheet 184 exiting the pair of rollers 142 is 3 mm, the gap 162 (and particularly the minimum distance of the gap) between the upper and lower rollers 144, 146 is adjusted such that the thickness across the width of the gum sheet 184 is preferably between about 2.4 and 3.6 mm, and more preferably between about 2.7 and 3.3 mm. More preferably, the variance is less than .2 mm and may be about.1 mm. As a result, a significant degree of precision and accuracy can be accomplished with the rollers 142 for gum. Some variance is expected with various gum recipes due to variations in bounce back and shrinkage due to variations in elasticity, viscosity and resiliency of a given gum recipe. The gum sheet 184 having a generally uniform thickness may subsequently expand in its thickness or shrink in its thickness depending on a formulation of the gum. Further, the gum sheet 184 having a generally uniform thickness may subsequently be shaped, textured, and/or printed, which may alter the generally uniform thickness.

The rollers 144, 146 can be configured to have various diameters and widths depending on physical properties of the gum, a desired thickness and a width of the gum sheet 184, a desired temperature of the gum sheet 184 exiting the rollers 144, 146. In the embodiment shown in FIG. 1, the lower roller 146 has a larger diameter than the upper roller 144. However, in other embodiments, the upper roller can have a larger diameter than the lower roller, or the rollers can have a same diameter. Preferably, the lower roller 146 has a diameter between about .5 m and 3 m and a width between about 0.6 m and 1.3 m; and the upper roller 144 has a diameter between about .25 m and 1 m with a similar width. As illustrated, preferably the roller that carries the gum for several degrees of rotation is relatively larger in diameter for certain cooling/heating and/or setting effects as discussed later on.

While narrower rollers are possible, the rollers having widths between about 0.6 m and 1.3 m or wider provides the opportunity to produce a gum ribbon or sheet that is about the same in width, typically at least slightly narrower. Therefore, the rollers 144, 146 can provide substantial gum capacity improvements over the conventional thickness reduction process involving the sizing type extruder. The pair of rollers 144, 146 thus can provide a gum sheet that is 50 mm to 50 cm or more than 50 cm in width (width of the gum sheet 184 being measured in a direction substantially perpendicular to direction of gum movement through the system 106), and 125% -300% (or more) wider gum ribbons or sheet of the finished sized gum than conventional sizing type forming extruder with progressive size reduction rollers, and as noted throughout, while using significantly less energy. The pair of rollers 144, 146 thus can also provide a gum rope that is less than 50 mm, or 20 mm to 50 mm, and 25mm to 45 mm, with gum including a width under 50 mm being defined as rope or perhaps ribbon. Further, the hopper 154, which is configured with the feed rollers 220, 222, and the set of rollers 144, 146 can produce a gum sheet 184 having a desired width within a relatively small variance. In one embodiment, the hopper 154 and the set of rollers 144, 146 can produce a gum sheet 184 having a desired width preferably within 20% variance, more preferably within 10% variance, and most preferably within 5% variance or less. It is notable that the above discussed thicknesses and widths are achievable via solely a passing of the gum mass 182 through the gap 162 between the rollers 144, 146, and a forming of the gum mass 182 into the gum sheet 184 via this passing through the gap 162.

With a wider gum material, the speed of gum forming process can be reduced substantially if desired while still processing the same amount of gum as traditional rolling and scoring lines or higher speeds can be used to result in greater gum volume production. Traditional rolling and scoring lines may operate at a gum conveying speed of 22-25 meters/minute and the same amount of product can be had at speeds that are correspondingly slower to the width increase. Although the pair of rollers 142 in FIG. 1 comprises the larger lower roller 146 and a smaller upper roller 144, in other embodiments, the upper and lower rollers can be configured to have a same diameter.

Depending upon the desired thickness of the gum product, the rollers 142 are configured such that the spacing 162 is adjustable preferably between about 0.3 mm to 10.0 mm, although the spacing can be set as low as 0.1 mm. In one embodiment, the rollers 142 are configured to have a smooth surface finish, and a minimum spacing 162 of less than 0.5 mm to produce a paper thin web of gum having silky smooth surfaces and a thickness less than about 0.5 mm. It should be appreciated that the rollers 142 may be configured with any desirable actuation devices, such as but not limited to a servomechanisms, to control the vertical position of the rollers 142 relative to each other, and thereby adjust the gap or spacing 162.

The hopper 154 is arranged above the lower roller 146 such that a portion of the upper roller 144 and a portion of lower roller 146 proximate the spacing 162 define the inlet region 164. The hopper 154 has a tapered outer wall 166, which abuts the top surface 168 of the lower roller 146 with a very small clearance allowing rotation of the lower roller 146. Similarly, an outer wall 170 abuts the surface of the upper roller 144 with a very small clearance. The tapered outer wall 166 is configured to guide a gum mass 182 in the hopper 154 toward the feed rollers 220, 222. Alternatively, the walls of the hopper 154 may rest directly on the rollers 144, 146.

The upper roller 144 and the lower roller 146 can run at various rotational speeds. The rollers 144, 146 can run at a same rotational speed or different rotational speeds. The rotational speed of each of the rollers 144, 146 can be selected depending on physical properties of the input gum and an amount of heat transfer desired via the rollers 144, 146. In one embodiment, the lower roller 146, which is configured to have a larger diameter than the upper roller 144, runs at a higher rotational speed than the smaller upper roller 144. Further, a relative rotational speed of rollers 144, 146 can be adjusted to produce desired quality of the gum sheet 184, such as surface characteristics, thickness tolerance, temperature, etc.

The rollers 144, 146 may also be configured to run at a same linear speed or at different linear speeds as measured at the tangent of the surface of the rollers. In one embodiment, one roller is set at a constant linear speed, while a linear speed of the other roller can be varied + 30% of the constant linear speed of the roller. For example, a linear speed of the lower roller 146 can be set at 3 m/min, while a linear speed of the upper roller 144 is controlled between 2.1 m/min and 3.9 m/min. In such embodiment, the linear speed of the upper roller 144 is adjusted within the set range to achieve a smoother surface of the gum and to minimize wrinkling of the gum. Alternatively, the upper roller 144 may be set at a constant linear speed, while the linear speed of the lower roller 146 can be controlled within a desired range. A linear speed of one roller can be varied relative to a linear speed of the other roller within ranges of + 40%, + 30%, + 20%, or + 10%, depending on characteristics of a gum and a desired thickness and a width of the gum sheet 184 to maximize the smoothness and minimize wrinkles and other irregularities on the gum surface. In a different embodiment, the rollers 144,146 having different diameters can be configured to run at a same linear speed (e.g. same speed at the tangent; but different angular speed in that the smaller roller rotates faster).

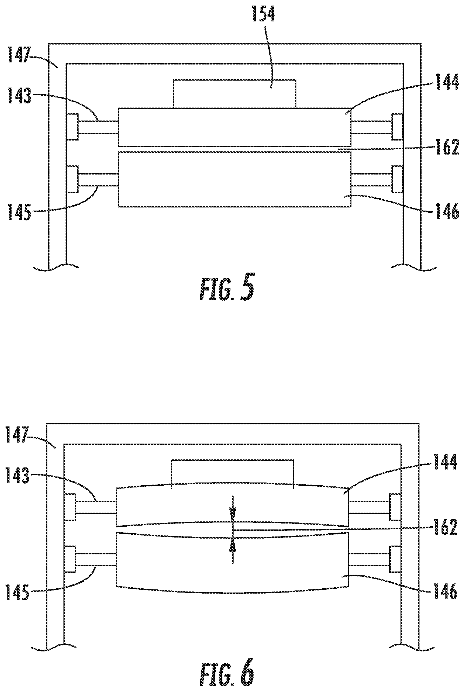

The dimensional configurations and material for the rollers 144, 146 and support structures of the rollers 144, 146 are engineered to minimize or eliminate deflection in the rollers 144, 146. FIG. 5 is a schematic illustration of a cross-web view of the rollers 144, 146 secured to structural frames 147. As shown, the upper roller 144 is mounted on the structural frames 147 by a shaft 143. Similarly, the lower roller 146 is mounted on the structural frames 147 by a shaft 145.

As shown in FIG. 5, the rollers 144, 146 are set up to provide a generally uniform cross web spacing 162 between the rollers 144, 146 from one end of the rollers to the other end. However, some high viscosity and/or low elasticity gum compositions can impart a high stress to the rollers 144, 146 as the rollers 144, 146 deform the gum mass 182. Some very viscous gum structures provided as the mass 182 may require additional force, such as additional augers in the hopper 154 pushing the gum mass 182 into the spacing 162 between the rollers 144, 146. Such viscous gum structures can exert high stress on the rollers 144, 146. Such stress can result in a deflection in the rollers 144, 146 as shown in FIG. 6, wherein the deflection is exaggerated for illustration purposes. As shown, the deflection in the rollers 144, 146 can result in an uneven spacing 162 across the rollers 144, 146, wherein the spacing 162 around the middle of the rollers 144, 146 is greater than the spacing 162 near ends of the rollers. Such uneven spacing 162 will produce a gum sheet 184 having a non-uniform cross-web thickness, which is very much undesirable as it will produce gum sheet 184 products having inconsistent dimensions.

The rollers 144, 146 may be strengthened by providing additional structural supports and/or supporting the rollers closer to the ends of the rollers to minimize or eliminate the deflection in the rollers. In one embodiment, the rollers 144, 146 are strengthened and supported such that the maximum deflection between the rollers is maintained under 0.5 mm, preferably under 0.1 mm when processing gum mass 182 with high viscosity and/or low elasticity. Further, the roller deflection can also be minimized or eliminated by increasing a diameter of the rollers or forming the rollers from materials having increased strength to withstand the stress imparted by the gum mass. For wider rollers, more strength is needs to withstand the stress and a larger diameter roller can be beneficial in providing sufficient roller strength to minimize the deflection. Thus, a diameter to width ratio of the rollers is carefully selected considering physical properties of gum mass 182 and desired gum sheet thickness to minimize the deflection in the rollers.

In some embodiments, wherein a viscous gum structure having a low deformability is formed via the pair of rollers strengthened to minimize the deflection, a high compressive pressure can be exerted on the gum strength, which in turn applies a high stress to the rollers. In such embodiments, solid particulate ingredients in the gum can indent the surface of rollers.

Alternatively, physical properties of the gum mass 182 can be adjusted to minimize the deflection in the rollers 144, 146 during the compressive forming and sizing process. For example, a temperature of the gum structure output 130 from the mixer 102 and/or a temperature of the loaves 132 may be raised to improve compressibility of the gum mass 182 entering the pair of rollers 144, 146. In other embodiments, one or both of the rollers 144, 146 may be heated to transfer heat to the gum mass 182, thereby decreasing viscosity and improving compressibility/formability of the gum sheet 184. An amount of pressure and heat exerted on the gum mass 182 can have various effects on the final gum product. Thus, the deflection of the rollers is controlled considering the final gum product, as strengthening of the rollers can increase pressure exerted on the gum mass 182 and increasing the temperature further exposes the gum to heat post mixing processes.

Another feature of FIG. 1 is that the roller 146 that carries the gum over several degrees of rotation serves to transfer heat from or to the gum sheet 184 quickly and efficiently due to the relatively thin state of the gum and due to heat transfer via conduction. To facilitate the same, at least the lower roller 146 (and preferably both rollers) may be chilled or heated. Each of the upper roller 144 and the lower roller 146 may be provided with internal channel(s) wherein a heating or cooling fluid such as tempered water or lower freezing point fluid flows for heating or cooling the rollers. Therefore, the surface temperature of the rollers 144, 146 may be adjusted from about -15°C to 90 °C. In one embodiment, the surface temperature of the rollers 144, 146 can be controlled between about 0°C-90C° by circulating a cooling fluid or heating fluid having a temperature between about 0°C-90C° within the rollers 144, 146. The forming rollers may be chilled to a surface temperature between about 5°C to 25C°; and preferably around 15C°. This has several advantages as reducing or eliminating later conditioning/cooling, and reducing flash off of heat sensitive ingredients such as flavors as the gum is cooled much earlier in the process. Alternatively, the forming rollers may be heated to a surface temperature between about 40°C to 60C°, which can facilitate forming of a gum sheet and reduce thickness variation of the gum sheet.

The finished gum mass 182 having an average temperature between about 40°C-60C° may be fed between the set of forming or sizing rollers 142. One or both rollers 144, 146 are heated to a surface temperature between about 30°C-70C°, more preferably between about 40°C-60C° to be closely matched to the temperature of the finished gum mass 182. Such heating of the roller(s) facilitates forming of the gum and controls the viscosity of the gum, which is carried by the lower roller 146. If the surface temperature of roller(s) 144, 146 is too high, in some embodiments, the gum may heat and then become too sticky and stick to the roller(s). If the surface temperature of the roller(s) 144, 146 is too low, the local viscosity of the gum may increase to a point, wherein the gum becomes too hard for forming or may not stay on the lower roller 146. Thus, depending on a formulation of the gum, the surface temperature of the roller(s) 144, 146 may be set to aid in preventing the gum sticking to the roller(s) 144, 146, and to facilitate forming of the gum.

As is mentioned above, to achieve heating or cooling of the rollers 144, 146, a heating/cooling fluid is circulated through the rollers 144, 146. For example, FIG. 8 shows a cross sectional view of rollers 144, 146 including internal channels 204, 206. In this embodiment, the internal channel 206 of the lower roller 146 is shown as a hollow space between an outer layer 207 and an inner core 208, wherein a plurality of rims 209 support the outer layer 207 (the plurality of rims can be designed for the maximum support, for example, the rims may be in honeycomb like arrangement). As discussed, a heating/cooling fluid can flow in the hollow space forming the channel 206 to cool the outer layer 207. The upper roller 204 is configured similarly as the lower roller 206 in this embodiment. In other embodiments, the cooling channel may be formed differently, for example the cooling channel can be formed of a thinner coiling channel.

Only one of the rollers 144, 146 may be provided with the internal channels for the thermal fluid, or neither rollers may be provided with the internal channels. The upper roller 144 and the lower roller 146 can be cooled or heated to a same temperature or different temperatures. For example, the upper roller 144 may not be cooled or cooled to a temperature higher than that of the lower roller 146. The upper roller 144 having a higher temperature can facilitate forming and sizing of the gum mass 182 into the gum sheet 184, while the lower roller 146 cooled to a lower temperature can facilitate cooling of the gum sheet 184 and releasing of the same from the lower roller 146. In one embodiment, the upper roller 144 may be heated above a temperature of a gum mass 182 in the hopper 154 to lower the viscosity and increase the deformability of the gum as the upper roller 144 conveys the gum toward the lower roller 146. The lower roller 146 is chilled to provide cooling as the gum mass 182 is deformed into the gum sheet 184 between the upper roller 144 and the lower roller 146.

The web of gum formed, sized, and cooled or heated using the rollers 144, 146 can have a temperature gradient across the thickness of the gum sheet 184. This is because the gum sheet 184, a substantial amount of which is elastomer, is not a good thermal conductor, and thus the middle portion of the gum may remain at a different temperature than that of surfaces, which are in direct contact with the rollers. Such a temperature gradient can be amplified when the rollers 144, 146 are maintained at different temperatures. For example, the upper roller 144 may be heated to a surface temperature of about 50°C and the lower roller 146 is chilled to a surface temperature of about 5°C, wherein the gum mass 182 having an average temperature of about 40°C is formed, sized and conditioned into the gum sheet 184 having a thickness of about 2 mm. Here, the gum sheet 184 can have a large temperature gradient, wherein a temperature of the gum surface in contact with the lower roller 146 is close to the surface temperature of the lower roller 146 of about 5°C and a temperature of the gum surface in contact with the heated upper roller 144 is close to the surface temperature of the upper roller 144 of about 50°C with a temperature of the gum sheet 184 therebetween varying from about 5°C to about 50°C. Here, crystallization of the chilled gum surface can be substantially different than that of the heated gum surface, as a low temperature conduction cooling of the gum sheet 184 via the chilled roller can result in a very different crystallization compared to a slow cooled gum sheet 184, for example by convection. Even when both rollers 144, 146 are chilled to a same temperature, the gum sheet 184 may have a temperature gradient across a thickness of the gum sheet 184, although much less than that of gum sheets 184 formed by rollers of different temperatures.

A temperature variation in an input gum entering the gum forming station 106 can have a significant impact on the temperature consistency of the gum sheet 184. This is because the temperature altering of the gum sheet 184 by conduction via the forming roller(s) 144, 146 occurs in a fraction of time when compared to traditional cooling and conditioning of the gum via convection, which can be hours or even days. As such, the temperature variation in the input gum mass can translate into a temperature variation in the gum web that is quick cooled, for example in less than one minute, by chilled roller(s) 144, 146. Thus, some embodiments can include measures to control a temperature variation of the input gum mass within a desired range. For example, a mixing extruder for preparing the input gum structure can be equipped with sophisticated temperature control modules to extrude the gum within the desired temperature range. Alternatively, the gum manufacturing line 100 may include an optional conditioning unit between the loafing machine 104 and the gum forming station 106 for conditioning the gum loaves 132 to a desired temperature range.

The chilled forming roller or rollers 144, 146 can effectively reduce a temperature of the relatively thin gum sheet 184 as it is carried by the chilled forming roller(s) for heat transfer. Therefore, as shown in FIG. 1 , a relatively large diameter roller may be provided wherein the gum sheet 184 is carried over at least about 1/4 a rotation (at least about 90 degrees and up to about 180 degrees) to provide a long residence time to facilitate heat transfer out of the gum sheet 184 and to the chilled roller due to contact and conduction. The chilled fluid travelling through the rollers 144, 146 is excellent at maintaining the forming roller(s) to a surface temperature between about 5°C to 25C°; and preferably around 15C°. The chilled forming roller(s) having a cold metal surface having a high thermal conductivity works effectively to reduce the temperature of the relatively thin chewing gum, preferably having a thickness less than 10 mm; and more preferably at 0.5-6 mm, by facilitating heat transfer from the gum sheet 184 to the cold metal surface. The heat transfer roller may advantageously be one or both of the pair of forming rollers, or may also independently be a separate roller upon which gum is transferred.

FIG. 9 illustrates a stand alone cooling roller 600, wherein a continuous gum sheet 602 is guided toward the roller 600 by a guide 604. As shown, the gum sheet 602 is carried by the roller 600 about 270° around the roller for cooling. Although this embodiment is shown such that the continuous sheet of gum sheet 602 is transferred onto and off of the cooling roller 600 at 90° apart to maximize the residence time on the cooling roller 600 (the residence time may even be longer if the angle between the entry and exit is narrowed further), the continuous sheet of gum sheet 602 may be transferred onto the cooling roller 600 at a various point and exit at a various point according to configuration of other components in a gum manufacturing system and the location of the cooling roller 600 in the gum manufacturing system . The cooling roller 600 can be arranged in various locations in a gum manufacturing system. For example, the cooling roller 600 may be arranged upstream or downstream of the forming rollers 144, 146, or upstream or downstream or interposed among traditional progressive size reduction rolling rollers, etc. If downstream, the conveyor surface 144 may be configured to carry the gum to a downstream point of the cooling roller 600 as opposed to a scoring mechanism.

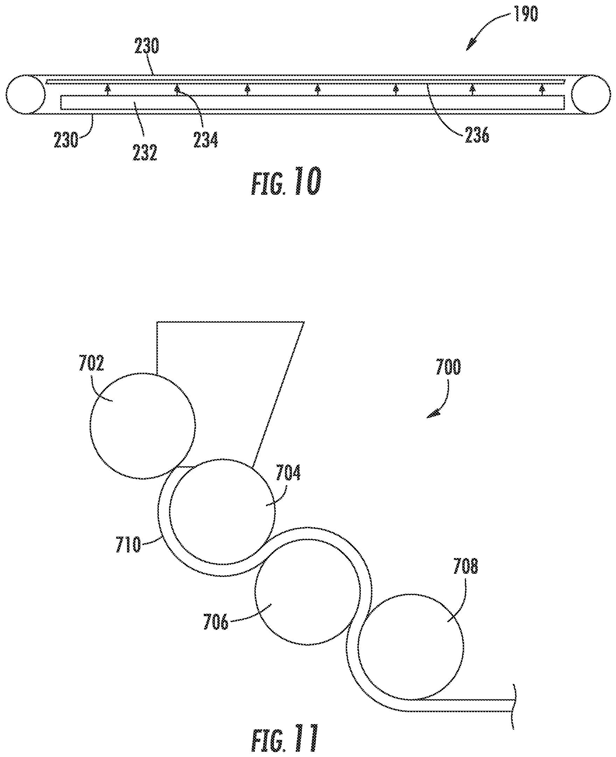

A gum forming system may include multiple heat transfer rollers. FIG. 11 illustrates the gum forming system 700 including four heat transfer rollers 702, 704, 706, 708.One or both of the forming rollers 702, 704 may be heated to reduce viscosity of a gum sheet as the rollers 702, 704 form the gum sheet to a desired width and thickness. The continuous web of gum sheet 710 exiting the roller 704 is then carried by the chilled rollers 706, 708, wherein the gum sheet is cooled to a desired temperature. Alternatively the pair of forming rollers 702, 704 may also be chilled.

The upper roller 144 having a diameter of about 0.5 meter and the lower roller 146 having a diameter of about 1 meter may be cooled to around 15°C. The rollers 144, 146 are counter rotated to form and cool the gum mass 182 having a temperature between 40°C to 60°C at a linear speed of about 2 meters/min to provide the gum sheet 184 with a residence time on the lower roller 146 of about 1.6 min. The rollers 144, 146, are configured to have a spacing 162 of about 3 mm gap width to form the gum sheet 184 having a generally uniform thickness of about 3 mm, wherein the temperature of the gum sheet rapidly drops to about 15 °C to 30°C. Alternatively, the gum forming system 106 is configured to form and cool the gum sheet 184 at a line speed between about 5 meters/min to about 30 meters/min.

The rollers 144, 146 may also provide the opportunity to eliminate dusting of the gum with talc or other particulate anti-sticking agent that are used in more conventional rolling reduction operations. This can avoid the need for dust collection equipment as used in traditional rolling and scoring lines; and can also be used to create a more aesthetically pleasing product that has more vibrant colors as dusting operations dull the final product color. Further, by eliminating the use of dusting powders, a clean up process of the gum manufacturing line 100 can be dramatically made easy, since a substantially large portion of residual mess requiring lengthy cleaning in conventional rolling and scoring lines is due to the use of powders and the large number of rollers. As such, the clean up time for a change over, which was hours, 10 hours in some conventional rolling and scoring gum lines, can be reduced to minutes according to some embodiments of the present invention. Therefore, the embodiments of the present invention can increase the productivity of the gum manufacturing line by substantially reducing clean up/change over time when compared to traditional rolling and scoring gum lines.

More specifically, elimination of gum/roller dusting with talc or other particulate anti-sticking agent allows for a reduction in energy consumption by the sizing system 106 relative to more conventional systems that require such particulates. In an exemplary embodiment, the system 106 consumes an energy of not more than .009 KWH/kg in forming and sizing the gum mass 182 into the gum sheet 184, and more specifically .002 KWH/kg to .006 KWH/kg or.002 KWH/kg to .003 KWH/kg in forming and sizing the gum mass 182 into the gum sheet 184.

The above energy data may be generated using a system running at a standard linear line speed of approximately 15 m/min. However, it should be noted that the system 106 has the capability of running at a linear line speed of up to 35 m/min and faster. This energy is consumed when forming and sizing a gum mass including most conventional gum properties. In an exemplary embodiment, these gum mass properties include a viscosity of approximately 1000 Pa.s at a sheer rate of 250 1/s at a temperature of 45°C (the viscosity being inversely proportional to the sheer rate), and a density of approximately 1100 kg/m³. In a further exemplary embodiment, the energy consumed does not account for any pre-extrusion or pre-cooling that may or may not be necessary to the system. However, dust collection may be accounted for in calculating a consumed energy of not more than.009 KWH/kg (such as in prior art systems).

It should be noted that the above mentioned consumption represents an approximately 50% reduction in energy usage over conventional sizing systems involving particulate and particulate collection, and approximately a 33% reduction in energy usage over such a conventional sizing system if particulate application and collection were not taken into account. It should also be noted however that an increase in the rotational rate of either of the rollers 142 (such as to increase system output) to include linear speeds at higher ends of the linear speed ranges mentioned above may result in energy consumption at an upper end for the above mentioned energy consumption range (or beyond). In addition, running the rollers 142 at the same linear speed (at the gap 162) may result in a lesser energy consumption that running the rollers 142 at different linear speeds regardless of whether the rotational speeds are the same or not. However, running the rollers 142 at different linear speeds can be advantageous when sizing some gum mass compositions to a thickness of 1.5mm or lower.

Turning now to an exemplary embodiment that may effectively replace the powder mentioned above, it should be appreciated that the upper roller 144 may be equipped with an oiling roller 174 to lubricate the upper roller 144 with a release agent such as food quality vegetable or mineral oil, which acts to prevent sticking of the gum to the rollers 142. Similarly, the lower roller 146 is equipped with an oiling roller 176 to lubricate the lower roller 146. Therefore, the gum forming system 106 eliminates the need of powder releasing agents such as talc or a polyol. Although each of the rollers 144, 146 is provided with the oiling roller 174, 176 in this embodiment, in other embodiments, only one of the upper and lower rollers 144, 146 may be provided with one oiling roller, or neither of the rollers 144, 146 may be provided with an oiling roller when the rollers 144, 146 have a sufficiently low surface tension or adhesion to release the gum sheet 184 without aid of a releasing agent and the gum sheet 184 is sufficiently not tacky for subsequent scoring, cutting and packaging processes. Further, other lubricating systems, for example, a spray bar or a dipping basin can be used to apply a suitable liquid lubricator. As shown in FIG. 1, the roller 146 is provided with a scrapper 188 downstream of the gap 162 to detach the gum sheet 184 from the surface of the roller 146 onto a conveyor belt 190.

It should be appreciated that at least a portion of the above mentioned release agent may desirably remain with the gum sheet 184 after the gum sheet 184 has passed between and contacted the sizing rollers 142. After being released from rollers 142 including lubricating systems such as the oiling rollers discussed above, the sheet 184 may subsequently include .1% to 3% of the oil applied, with most of the percentage of oil remaining with the sheet 184 being located at or near one or both surfaces of the gum sheet 184. This release agent may desirably affect a flavor profile of the gum sheet 184, and be a vegetable fat from a vegetable such as but not limited to soybean, cotton seed, corn, almond, peanut, sunflower, sal, rapeseed, olive, palm, palm kernel, illipe, shea, and coconut, and/or at least one of cocoa butter, dairy fat, and polyethylene glycol (PEG). In addition, the release agent may include at least one flavor agent such as but not limited to synthetic flavor oils, natural flavoring aromatics and/or oils, oleoresins, extracts derived from plant, leaves, flowers, fruits, spearmint oil, cinnamon oil, oil of winter green, peppermint oil, clove oil, bay oil, anise oil, eucalyptus oil, thyme oil, cedar leaf oil, oil of nutmeg, allspice oil, oil of sage, mace oil, oil of bitter almonds, cassia oil, citrus oils including lemon, orange, lime, grapefruit, vanilla, fruit essences including apple, pear, peach, grape, strawberry, raspberry, blackberry, cherry, plum, pineapple, apricot, banana, melon, tropical fruits, mango, mangosteen, pomegranate, papaya, honey lemon, cinnamyl acetate, cinnamaldehyde, citral diethylacetal, dihydrocarvyl acetate, eugenyl formate and mixtures thereof.

Still further, a release agent that changes from a liquid at processing temperature (i.e. during sizing at the rollers 142) to solid at room temperature may also be desirable. Accordingly, and in an exemplary embodiment, molten solid fats such as palm oil or coconut oil may be applied at 30 C - 40 C as a release agent on forming drums 142, and solidify on the gum sheet 184 as gum sheets are cooled (for instance below 20 C). Similarly, polyethylene glycol [PEG] of molecular weights 1000, 1200, 3000 up to 6000 may be applied at 40 C - 60 C as a release agent on forming drums 142, and also solidify on the gum sheet 184 as gum sheets are cooled. Solidification of these materials on the gum sheet 184 provides a barrier between stacked gum sheets, thereby preventing gum sheets from sticking to each other during conditioning and packaging operations which are normally carried out below 25 C.

As shown in FIG. 1, the upper roller 144 of FIG. 1 may also be provided with a scraper 186 near the spacing 162 to ensure the gum sheet 184 detaches from the surface of the upper roller 144, thereby facilitating the gum sheet 184 to travel on the lower roller 146. The lower roller 146 may further be provided with a scrapper 188 near the bottom of the lower roller 146 to detach the gum sheet 184 from the surface of the lower roller 146 onto a conveyor belt 190. The conveyor belt 190 may be adapted for cooling or heating to further condition the continuous sheet of gum sheet 184.

The conveyor belt 190 may also be chilled to provide additional cooling to the gum sheet 184. FIG. 10 schematically illustrates the chilled conveyor belt 190. As shown, the conveyor belt 190 includes an outer belt 230, a fluid channel 232, a plurality of spray nozzles 234, and a support 236. The outer belt 230 may be formed of any suitable material such as a polymeric material. In this embodiment, the outer belt 230 is formed of a nylon. The support 236 is formed of any suitable material having a relatively high thermal conductivity, such as a metal. In this embodiment, the support 236 is formed of a stainless steel. The fluid channel 232 is configured to circulate a suitable cooling or heating fluid. In this embodiment, chilled water flows through the channel 232, wherein the plurality of spray nozzles 234 spray chilled water onto the stainless steel support 236, thereby chilling the stainless steel support 236. The chilled stainless steel support 236 supports the nylon belt 230. Therefore, when the gum sheet 184 is carried on the top surface of the conveyor belt 190, heat from the gum sheet 184 having a higher temperature than the chilled stainless steel support 236 transfers through the nylon belt 230 to the chilled stainless steel support 236, thereby cooling the gum sheet 184. In this embodiment, a thickness of the nylon belt is configured to allow an adequate heat transfer between the gum sheet 184 and the support 236, while providing a suitable support without easily tearing. In one embodiment, the support 230 has a thickness between 0.5 mm - 5 mm, and preferably between 1 mm - 2 mm.

The chilled conveyor belt 190 can be used in the gum forming systems of various embodiments of the present invention because the systems can form the gum sheet without using powder materials such as talc or other anti-sticking agent as described above. In conventional lines, wherein use of such dusting powder material is necessary to prevent the gum from sticking to rollers, a chilled conveyor belt is not feasible, since the powder dusting material will stick to the chilled surface of the conveyor belt.

The forming system 106 of FIG. 1 may also include a compression roller 192. Upon exiting the pair of rollers 142, the conveyor belt 190 moves the gum sheet 184 toward the compression roller 192. The compression roller 192 is arranged preferably about 0.5 m to 3 m from the lower roller 146, more preferably about 1 m - 1.5 m. The compression roller can remove surface imperfections, kinks, and may further reduce the thickness of the gum sheet 184, however usually any further reductions can be limited to 10% or less, thereby achieving advantages in that progressive rolling reductions are not necessitated. In this embodiment, the pair of rollers 142 can be configured to output the continuous gum sheet 184 having a thickness within 10% of a desired final thickness of the final gum product, and the compression roller 192 is configured to adjust the thickness of the gum sheet 184 by less than 10%. For example, in an implementation wherein the desired final thickness of a stick gum product is 2.0 mm, the spacing 162 of the pair of rollers 142 can be adjusted such that the continuous sheet gum sheet 184 has a generally uniform thickness of about 2.1 mm. In this implementation, the compression roller 192 is arranged relative to the conveyor belt 190 to reduce the generally uniform thickness to about 2.0 mm.

Depending on a formulation of the gum being formed, the gum sheet formed through a pair of rollers may expand upon exiting the pair of rollers, thereby resulting in an increased thickness of the gum sheet. For example, a gum sheet may be formed through a pair of rollers having a spacing of 3 mm, wherein the gum sheet is compressed down to a thickness of about 3 mm. Upon exiting the pair of rollers, the gum sheet may expand to a thickness of about 3.3 mm. Here, a subsequently arranged compression roller may be configured to apply sufficient pressure to compress the expanded gum sheet layer back down to 3 mm. Alternatively, a gum sheet may shrink upon exiting the pair of rollers. For example, a gum sheet may shrink by about 10% in its thickness upon exit. Here, the spacing may be set to about 10% or more greater than a desired final thickness. For example, wherein the final desired thickness of the gum sheet thickness is 3 mm, the pair of rollers can be set to have a spacing of about 3.5 mm. The gum sheet is compressed down to a thickness of about 3.5 mm between the pair rollers and shrinks upon exiting the pair of rollers to a thickness between about 3.1 mm - 3.2 mm. The shrunken gum sheet is then further compressed via a subsequent compression roller to the desired final thickness of about 3 mm. The compression roller 192 can be configured to be a chilled roller to provide additional cooling.

In FIG. 1, the system 100 further includes a scoring roller 194, a lateral dividing roller 196 downstream of the compression roller 192, and a cooling tunnel 200. The scoring roller 194 and the lateral dividing roller 196 score and divide the gum sheet 184 into individual scored sheets 198. The scored sheets 198 are conveyed to the cooling tunnel 200, wherein the scored sheets 198 are cooled from both top and bottom sides with a forced air. As the scored sheets 198 are further conditioned in the cooling tunnel 200, the gum material of the scored sheets 198 stiffens sufficient enough for stacking so as to maintain shape and to minimize material creep. In one embodiment, the cooling tunnel 200 is configured to condition the gum sheet 198 to a temperature as low as about 0°C-15°C. The scored sheets 198 are then stacked into stacks of gum sheets 202 and transferred for subsequent packaging processes. The cooling tunnel 200 can be arranged at different locations in the gum manufacturing system 100. For example, the cooling tunnel 200 can be arranged between the compression roller 192 and the scoring roller 194, such that a gum sheet is cooled before being scored and/or cut. Alternatively, the gum manufacturing system 100 may include additional dividing and/or cutting rollers and packaging equipments for producing packaged gum products in a single line.

The cooling tunnel 200 can be of any conventional type, for example, the cooling chamber disclosed in U.S. Patent No. 6,214,389 assigned to the predecessor of interest of the present assignee. The cooling tunnel 200 may also be similar to the cooling towers disclosed in U.S. Patent No. 5,756,133 assigned to the predecessor of interest of the present assignee. The cooling tunnel 200 may utilize a forced air cooling mechanism and/or liquid cooled parts such as chilled rollers, chilled belts, chilled steel bands, etc. Further, the cooling tunnel 200 may be compartmentalized including different chambers or areas having different internal temperatures and/or humidity, for example, via force air input of different temperatures and/or humidity.

The scoring roller 194 and the dividing roller 196 may be replaced with other gum shaping solutions, such as a drop-roller, a die cutter, pelletizer or other similar gum shaping equipments (provided the sheet is cooled to a sufficient extent). As such, the gum manufacturing system 100 can produce a chewing gum having various final shapes, such as slabs which can subsequently be packaged, or pellets that are subsequently coated.

The scoring roller 194 and the dividing roller 196 may be replaced with a rolling/scoring system such as the traditional rolling and scoring systems disclosed in U.S. Patent Nos. 4,882,175 and 7,112,345. The cooling tunnel 200 may be arranged before or after final gum shaping equipment or a rolling/scoring system.

The scoring roller 194 and the dividing roller 196 may be replaced with a traditional rolling/scoring system with the rolling/sizing rollers omitted because the forming/sizing of the gum is completed via the gum forming system 106. The cooling tunnel 200 is arranged after the rolling/scoring system. In this embodiment, a finished gum 182 in the hopper 154 has an average temperature between 40°C-60°C. The rollers 144, 146 are equipped with temperature control mechanisms, wherein a heating/cooling fluid may be circulated to heat the rollers 144, 146. The fluid temperature may be controlled to maintain the rollers 144, 146 at a surface temperature between 40°C-60°C. Presumably, the temperature of the fluid is correspondingly between 40°C-60°C. The rollers 144, 146 facilitate forming of a continuous sheet of gum 184 and control a local viscosity of the gum such that the gum can be formed to a desired thickness and width and carried by the lower roller 146 to the conveyor belt 190. The continuous gum sheet 184 exiting the set of rollers 144, 146 has a temperature at the surface in contact with the lower roller 146 between 35°C-60°C and at the surface not in contact with the lower roller 146 between 35°C-60°C. Depending on a thickness and formulation of the continuous gum sheet 184, a temperature gradient throughout the thickness of the gum may be between plus or minus 0°C-5°C. The continuous sheet of gum having a temperature between 35°C-60°C then enters the rolling/scoring system, wherein the continuous sheet of gum is scored and/or cut to sheets, ropes, strips, pellets, etc. The scored gum having a temperature between 20°C-30°C and a temperature gradient throughout the thickness of between plus or minus 0°C-5°C enters the cooling tunnel 200.

The internal temperature of the cooling tunnel 200 is maintained at a temperature between 0°C-25°C, wherein forced air having a temperature between 0°C-25°C and/or other chilled rollers, belts, steel bands, etc. having a temperature between 0°C-25°C are utilized. An internal humidity level of the cooling tunnel 200 is maintained at between 30% RH - 50% RH. A residence time of the gum in the cooling tunnel may be between 30 seconds - 10 minutes, depending on the desired temperature of the gum and/or downstream final shaping/packaging processes as well as gum handling capabilities of the cooling tunnel 200 and the form of the gum as it passes through the cooling tunnel 200. The gum exiting the cooling tunnel 200 has a temperature between 5°C-20°C and a temperature gradient throughout the thickness of gum of between having a temperature between 0°C-1°C. In one embodiment, the continuous sheet of gum is scored into pellets and cooled via the cooling tunnel 200, wherein the cooled sheet is hard enough to be dropped into a bin to break apart.

Although, the gum manufacturing system 100 includes the cooling tunnel 200, the cooling tunnel 200 is optional. Alternatively, the pair of rollers 142 equipped with cooling mechanisms may sufficiently lower the temperature of the gum sheet 184 such that further conditioning may not be necessary. Further, as discussed above, the gum forming system including cooled roller(s) and optional cooling tunnel provide sufficient cooling and conditioning of the gum product, and a subsequent conditioning of a conditioning room prior to packaging is not necessary for some gum formulations. The elimination of a lengthy conditioning in the conditioning room can substantially reduce flash off of volatile gum ingredients such as flavors, thereby preserving more flavors for consumer enjoyment. Further, by eliminating the use of the forming extruder, the gum forming system 106 may reduce the amount of shear and mechanical force applied to the gum product, thereby better preserving shear sensitive gum ingredients such as encapsulated flavors and sweeteners.

Although the mixing system 102 of FIG. 1 is shown as a continuous line including the gum mixing system 102, the loafing machine 104, and the gum forming system 106, in other embodiments, one or more of these components of the gum manufacturing system 100 may be located in different parts of a manufacturing plant or even in a different manufacturing plant. For example, in one embodiment, the gum mixing system 102 and the loafing machine 104 are located in one plant, and the gum forming system 106 and other subsequent components, such as the scoring and dividing rollers 194, 196 and packaging components, are located in a different plant, wherein the gum loaves 132 formed by the loafing machine 104 are transferred from one plant to the other for subsequent processes.

### OTHER ILLUSTRATED EMBODIMENTS

As mentioned during the above discussion, there are numerous other alternatives of a gum manufacturing system including a gum forming system such as 106, some of which will be introduced below. These will be explained in much less detail with reference to the components of the above described system for details. It is understood that the options, description and discussion above for forming system 106 and overall system 100 are also applicable in the below described systems.

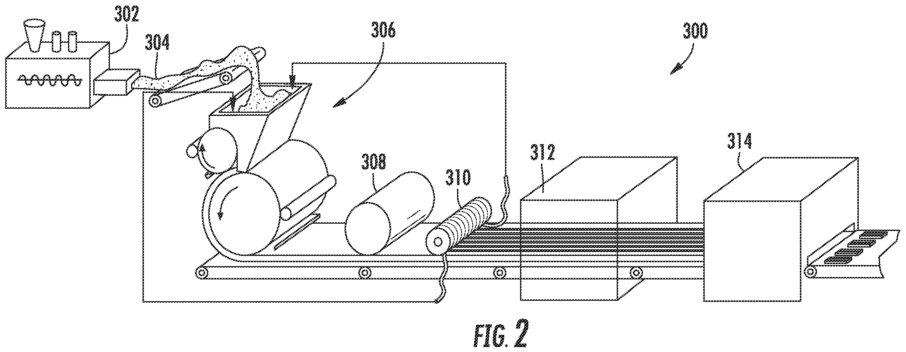

A gum manufacturing system 300 shown in FIG. 2 includes a mixing system 302, a forming or sizing system 306, a compression roller 308, a scoring roller, 310, a cooling tunnel 312 and a packaging station 314. In this embodiment, the gum manufacturing system 300 preferably produces a finished gum, although other gum structures may also be processed in the system 300. The mixing system 302 may include one or more mixers, as it was with the mixing system 102, however, the mixing system 302 is shown here as an extruder configured to output a non-uniform finished gum mass 304. The non-uniform finished gum mass 304 is then fed directly into the forming system 306, without being preformed into a uniform shape. The finished gum mass 304 is sized and cooled by the rollers of the forming system 306 as described at length with regard to the forming system 306. The finished gum is subsequently processed through the compression roller 308 and the scoring roller 310 as it was with the of FIG. 1. Here, the scoring roller 310 is configured to trim the edges of the continuous web of the finished gum, wherein the trimmed edges are recycled back into the forming system 106 to reduce or eliminated waste. The scored web of finished gum may optionally be further conditioned to a desired temperature and a moisture content in the cooling tunnel 312 prior to entering the packaging station 314, wherein the scored web of finished gum is further divided and wrapped into a final gum product 316.

The gum manufacturing system 300 provides a continuous line from mixing of gum ingredients to packaging of a final gum product. As such, any delays from staging and/or transportation of work-in-process products are substantially reduced or eliminated. Further, the rollers of the forming system 306 and the cooling tunnel 312 provide sufficient cooling and conditioning such that the finished gum can be immediately packaged without being conditioned in a conditioning room for a relatively long period of time. Such continuous system for manufacturing and packaging of gum products without a lengthy conditioning is specially beneficial for retaining volatile ingredients such as flavors by reducing flash off.

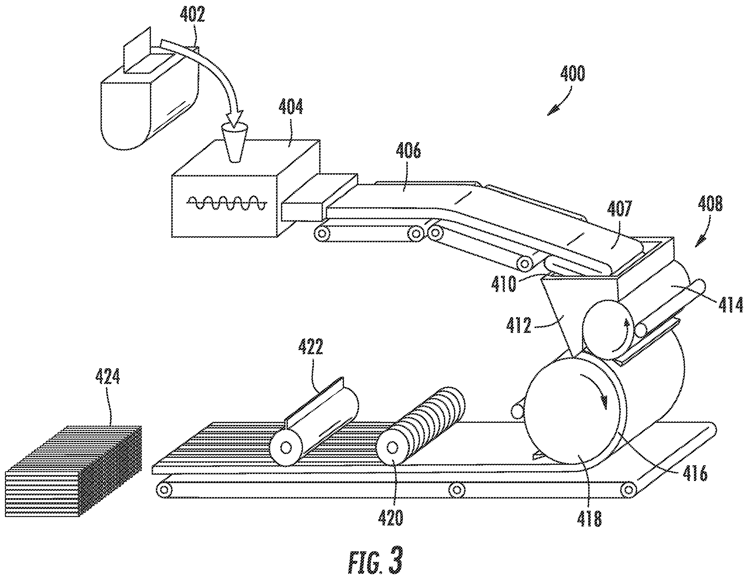

FIG. 3 shows another gum manufacturing system. The gum manufacturing system 400 includes a mixing system 402, a pre-forming extruder 404, a forming or sizing system 408, scoring roller 420, and a dividing roller 422. The mixing system 402 is a batch mixer which outputs a non-uniform gum structure. The non-uniform gum structure is then fed into the low shear pre-forming extruder 404 including a large output orifice to minimize any shear stress introduced in the gum structure as it is being formed into a generally uniform continuous web of gum structure 406 having a thickness greater than about 20 mm (in other similar embodiments, the thickness of the web of gum structure may be less or greater than 20 mm.) The continuous web of the gum structure 406 is fed as gum mass 407 into a hopper 412, wherein a slanted wall 410 of the hopper 412 guides the accumulating gum mass 407 toward rollers 414, 418, wherein the rollers 414, 418 size and cool the gum mass 407 into a gum sheet 416 of a desired thickness and a temperature. The hopper 412 can provide surge control and feed control functions, and may also allow for slacks in the gum mass 407 which can be controlled for a consistent feed into the rollers 414,418. The gum sheet 416 is subsequently scored and divided via the scoring roller 420 and the dividing roller 422. The scored and divided gum is then stacked into a stack 424 for further downstream processes as it was with the first embodiment of FIG. 1 (provided the gum has been cooled and/or dusted).

The gum manufacturing system 400 provides a mechanism for continuous feeding of a generally uniform web of the chewing gum into the forming system 408. Such system can be advantageous for producing a gum sheet 416 having a consistent web width and may further reduce force required for sizing of the gum since the uniform feed can be easier to compress through a spacing between the rollers than an inconsistent non-uniform gum mass.

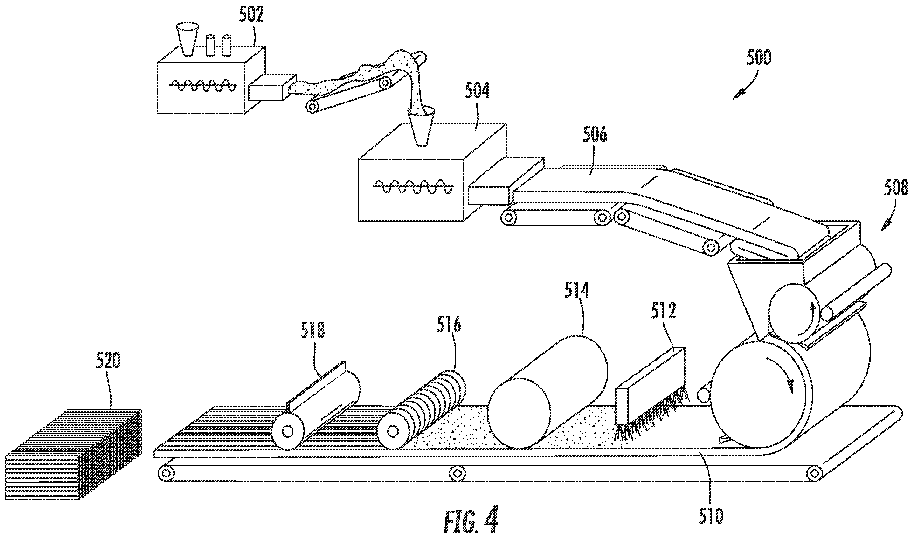

FIG. 4 shows another gum manufacturing system. The gum manufacturing system 500 includes a mixing system 502, a pre-forming extruder 504, a forming or sizing system 508, an applicator 512, a compression roller 514, a scoring roller 516, and a dividing roller 518. The gum manufacturing system 500 preferably produces a finished gum including other confectionery articles sprinkled and embedded on the top surface. The mixing system 502 is shown as an extruder outputting a non-uniform finished gum mass. The non-uniform finished gum mass is then fed into a low shear pre-forming extruder 504 wherein the non-uniform finished gum mass is formed into a generally uniform continuous web of finished gum 506, as it was with FIG. 3. The continuous web of finished gum is then sized and cooled in the forming system 508, as described with regard to the forming system 408. The web of finished gum 510 exiting the forming system 508 is sprinkled with confectionery chips, candy sprinkles or other confectionery materials using the applicator 512. Although shown here as a single applicator, two or more applicators can be provided for sprinkling of more than one confectionary materials. The web of finished gum 510 may be printed with edible materials at this point. The web of finished gum 510 sprinkled with confectionary materials passes through the compression roller 514, wherein sprinkled confectionary materials are embedded into the top surface of the finished gum as the compression roller 514 smoothes the surface of the sprinkled web of finished gum. The web of sprinkled finished gum is then scored and divided using the scoring roller 516 and the dividing roller 518, and stacked into a stack 520 for further downstream processes, as it was with the embodiment of FIG. 1.

The gum manufacturing system 500 allows for production of various gum products including different edible pieces embedded on the surface of the chewing gum. As such, a finished gum formulation can be used to manufacture, for example, various chewing gum products having different flavored candy sprinkles.

### SPECIFIC GUM FORMING EXAMPLES

In laboratory system, a separate motor drives each of the rollers. A gap between the upper and lower forming rollers, is adjusted via a servo system. Any roller used in the may formed of a highly polished stainless steel. The upper forming roller has a diameter of about 464mm and the lower roller has a diameter of about 650mm. The rollers have a same width, slightly great than about 230mm, which can form a 9 inch (228.6mm) wide sheet of gum. Each roller is configured to circulate a cooling or heating fluid, or impart temperature change to the gum.

The compression roller is arranged on the conveyor belt. A gap between the compression roller and the conveyor belt is manually adjusted to match a thickness of a gum sheet formed via the upper and lower forming rollers. The compression roller is also formed of a highly polished stainless steel. The compression roller has a diameter of about 464mm and a width slightly greater than about 230mm to process up to a 228.6 mm (9 inch) wide gum sheet. The compression roller is also configured as a heat exchange roller with internal channels to circulate a cooling or heating fluid.

In these laboratory runs, a desired finished gum is prepared upstream into a rope, and the rope of finished gum is fed into the hopper. However, the gum can be fed continuously in a generally uniform web or fed in batches in irregular chunks. In the laboratory system, the rope of finished gum fed into the hopper has a temperature between about 45°C and 55°C, and a viscosity of about 1,000,000 cP ± 10%.

In the laboratory system, the forming rollers are driven independently by the motors. Thus, the rollers can be configured for linear speed at the gap of a same or a different linear speed. Each of the forming rollers can rotate at a linear speed between about 1-40m/min, preferably between about 3-35m/min, and more preferably between about 5-16m/min. The compression roller can rotate at a same or different linear speed than the forming rollers. The compression roller can have a linear speed between 1-40m/min, preferably between about 3-35m/min, and more preferably between about 5-16m/min.

In the laboratory system, the forming rollers are configured to have a same surface temperature between about 5°C and 90°C, preferably between about 15°C and 70°C, and more preferably between about 45°C and 60°C. The compression roller can have a same or different surface temperature than the upper and lower forming rollers. The compression roller can have a surface temperature between about 5°C and 50°C, preferably between about 10°C and 40°C, and more preferably between about 14°C and 22°C.

Finish gum sheets having various thicknesses between about 1mm and 6mm were formed using the laboratory system. The thickness and the thickness variance were optimized by adjusting a temperature of the forming rollers, a linear speed of the rollers, a temperature of the compression roller, a gap between the rollers. Exemplary gum forming run results are summarized in Table 2.

**Table 2**

| **Input Variable** | | | | | **Output Data** | | |
|---|---|---|---|---|---|---|---|
| **Temp. (°C) of at least one of the forming rollers** | **Upper forming roller speed (m/min)** | **Lower forming roller speed (m/min)** | **Compression roller temp. (°C)** | **Gap between upper and lower roller (mm)** | **Mean thickness of gum sheet (mm)** | **Std. Dev. (mm)** | **CV (%)** |
| 60 | 16 | 16 | 40 | 1.50 | 1.409 | 0.147 | 10.431 |
| 50 | 10.5 | 10.5 | 25 | 1.50 | 1.625 | 0.209 | 12.877 |
| 60 | 5.0 | 5.0 | 10 | 1.50 | 1.313 | 0.116 | 8.822 |
| 60 | 5.0 | 5.0 | 40 | 1.50 | 1.171 | 0.113 | 9.629 |
| 60 | 10.5 | 10.5 | 25 | 3.25 | 2.926 | 0.183 | 6.258 |
| 50 | 10.5 | 10.5 | 25 | 3.25 | 3.098 | 0.169 | 5.448 |
| 40 | 16.0 | 16.0 | 10 | 5.50 | 5.69 | 0.305 | 5.361 |
| 50 | 10.5 | 10.5 | 40 | 3.25 | 5.16 | 0.160 | 3.102 |
| 60 | 16 | 16 | 40 | 5.50 | 5.593 | 0.189 | 3.378 |
| 60 | 16.0 | 16.0 | 10 | 5.50 | 5.645 | 0.196 | 3.474 |
| 50 | 10.5 | 10.5 | 10 | 3.25 | 3.166 | 0.159 | 5.023 |
| 40 | 5 | 5 | 10 | 5.50 | 5.527 | 0.172 | 3.019 |
| 50 | 10.5 | 10.5 | 25 | 5.50 | 5.707 | 0.181 | 3.174 |
| 40 | 10.5 | 10.5 | 25 | 3.25 | 3.545 | 0.170 | 4.783 |
| 60 | 5.0 | 16.0 | 40 | 4.00 | 2.864 | 0.249 | 8.683 |
| 40 | 5.0 | 16.0 | 40 | 1.50 | 1.046 | 0.118 | 11.272 |
| 40 | 5.0 | 16.0 | 10 | 4.00 | 3.252 | 0.420 | 12.921 |
| 60 | 5.0 | 8.67 | 10 | 5.50 | 4.996 | 0.322 | 6.449 |

## Claims

1. A method for forming chewing gum, the method comprising:
providing a pair of rollers including a first roller and a second roller;
moving a gum mass having a non-uniform thickness from a hopper toward a gap between said rollers in a direction of flow; and
sizing the gum mass into a substantially continuous and flat gum sheet having a substantially uniform thickness between 0.3 mm to 10 mm via said pair of rollers, wherein said sizing via said pair of rollers pulls the gum mass towards and through a gap between said pair of rollers and said sizing causes 30 to 75% of a cross-sectional area of the gum mass between the gap and the hopper to be deflected in a reverse directional flow, said 30 to 75% of said cross-sectional area of the gum mass to be deflected occurring at an interior of the gum mass; where the reverse directional flow is measured at a location along a gap center line where the separation between the rollers is 10 to 50 times the gap width.

2. The method of claim 1, wherein said sizing is substantially extensional.

3. The method of claim 1, wherein surface areas of said gum mass in proximity to said pair of rollers are pulled by said pair of rollers at a greater velocity than more internal regions of said gum mass disposed distal to said pair of rollers.

4. The method of claim 3, wherein said surface areas of said gum mass in proximity to said pair of rollers is pulled by said pair of rollers at least five times a velocity of said more internal regions of said gum mass disposed distal to said pair of rollers.

## Patentansprüche

1. Verfahren zum Formen eines Kaugummis, wobei das Verfahren umfasst:
Bereitstellen eines Walzenpaares, das eine erste Walze und eine zweite Walze einschließt;
Bewegen einer Gummimasse mit einer ungleichmäßigen Dicke von einem Trichter zu einem Spalt zwischen den Walzen in einer Strömungsrichtung; und
Dimensionieren der Gummimasse zu einer im Wesentlichen kontinuierlichen und flachen Gummiplatte mit einer im Wesentlichen gleichmäßigen Dicke zwischen 0,3 mm und 10 mm über das Walzenpaar, wobei das Dimensionieren über das Walzenpaar die Gummimasse zu und durch einen Spalt zwischen dem Walzenpaar zieht und das Dimensionieren bewirkt, dass 30 bis 75 % einer Querschnittsfläche der Gummimasse zwischen dem Spalt und dem Trichter in einem umgekehrten Richtungsfluss abgelenkt werden, wobei die 30 bis 75 % der Querschnittsfläche der Gummimasse, die abgelenkt werden soll, in einem Inneren der Gummimasse auftreten; wobei der Fluss in umgekehrter Richtung an einer Stelle entlang einer Spaltmittellinie gemessen wird, an der der Abstand zwischen den Walzen das 10- bis 50-fache der Spaltbreite beträgt.

2. Verfahren nach Anspruch 1, wobei das Dimensionieren im Wesentlichen extensional ist.

3. Verfahren nach Anspruch 1, wobei Oberflächen der Gummimasse in der Nähe des Walzenpaares von dem Walzenpaar mit einer größeren Geschwindigkeit gezogen werden als mehr innere Bereiche der Gummimasse, die distal zu dem Walzenpaar angeordnet sind.

4. Verfahren nach Anspruch 3, wobei die Oberflächen der Gummimasse in der Nähe des Walzenpaares von dem Walzenpaar mindestens fünfmal so schnell wie die inneren Bereiche der Gummimasse gezogen werden, die distal zu dem Walzenpaar angeordnet sind.

## Revendications

1. Procédé de formation de chewing-gum, le procédé comprenant :
la fourniture d'une paire de cylindres incluant un premier cylindre et un deuxième cylindre ;
le déplacement d'une masse de gomme ayant une épaisseur non uniforme à partir d'une trémie en direction d'un écartement entre lesdits cylindres dans une direction d'écoulement ; et
le calibrage de la masse de gomme en une feuille de gomme essentiellement continue et plate ayant une épaisseur essentiellement uniforme comprise entre 0,3 mm et 10 mm par l'intermédiaire de ladite paire de cylindres, dans lequel ledit calibrage par l'intermédiaire de ladite paire de cylindres tire la masse de gomme en direction et au travers d'un écartement entre ladite paire de cylindres et ledit calibrage amène 30 à 75 % d'une aire en coupe transversale de la masse de gomme entre l'écartement et la trémie à être déviée dans un écoulement en sens inverse, lesdits 30 à 75 % de ladite aire en coupe transversale de la masse de gomme à dévier se produisant au niveau d'un intérieur de la masse de gomme ; où l'écoulement en sens inverse est mesuré à un emplacement le long d'une ligne centrale d'écartement où la séparation entre les cylindres vaut 10 à 50 fois la largeur d'écartement.

2. Procédé selon la revendication 1, dans lequel ledit calibrage est essentiellement extensionnel.

3. Procédé selon la revendication 1, dans lequel des zones de surface de ladite masse de gomme à proximité de ladite paire de cylindres sont tirées par ladite paire de cylindres à une plus grande vitesse que des régions plus internes de ladite masse de gomme, disposées distales par rapport à ladite paire de cylindres.

4. Procédé selon la revendication 3, dans lequel lesdites zones de surface de ladite masse de gomme à proximité de ladite paire de cylindres sont tirées par ladite paire de cylindres à au moins cinq fois une vitesse desdites régions plus internes de ladite masse de gomme, disposées distales par rapport à ladite paire de cylindres.
